# EUROPÄISCHE PATENTSCHRIFT

(11) **EP 1 558 116 B1**
(45) Veröffentlichungstag und Bekanntmachung des Hinweises auf die Patenterteilung: **30.05.2007**
(21) Anmeldenummer: 03769136.7
(22) Anmeldetag: 07.11.2003
(51) Int. Cl.: A47F 5/00, A47F 5/10, A47F 5/06

(54) **HÖHENVERSTELLBARER STÄNDER**
HEIGHT-ADJUSTABLE STAND
SUPPORT HAUTEUR REGLABLE

(30) Priorität: 07.11.2002 DE 20217314 U
(43) Veröffentlichungstag der Anmeldung: 03.08.2005
(73) Patentinhaber: Visplay International AG, 4132 Muttenz (CH)
(72) Erfinder: WALTER, Herbert, 79379 Müllheim (DE); KURY, Werner, 79379 Müllheim (DE)
(74) Vertreter: Ullrich, Gerhard
(86) Internationale Anmeldenummer: PCT/CH2003/000733
(87) Internationale Veröffentlichungsnummer: WO 2004/041033

(56) Entgegenhaltungen:
- EP-A- 0 295 843
- GB-A- 2 194 435
- US-A- 3 807 574
- US-A- 3 862 735
- US-A- 4 239 169
- US-B1- 6 213 434

## Beschreibung

Die vorliegende Erfindung betrifft einen höhenverstellbaren Ständer, z.B. zum Anhängen von Bekleidung. Der Ständer besteht aus einem Aussenrohr, das die Funktion einer Standsäule hat, und einem darin aufgenommenen, teleskopisch verschiebbaren Innenrohr. Das Aussenrohr ist auf oder an einer Tragstruktur befestigt, z.B. einer Plattform, die verfahrbar mit Rollen versehen sein kann. Andere Tragstrukturen für das Aussenrohr wären Sockel, Wandhalterungen oder Verstrebungen zwischen mehreren Aussenrohren. Bei derartigen Ständern besteht das Bedürfnis, das ausziehbare Innenrohr in verschiedenen Höhen mit möglichst einem Handgriff positionieren zu können. Damit wird eine abgestufte Einstellung für das Innenrohr erreicht, so dass sich die an den Ständer anzuhängenden Artikel, entsprechend deren unterschiedlicher Länge, vorteilhaft präsentieren bzw. aufbewahren lassen und der Ständer somit bei verschiedenen Aufhängehöhen auch eine vergrösserte Aufnahmekapazität erhält. Typischerweise ist das Innenrohr als Rohr ebenfalls hohl, wodurch der Materialeinsatz und das Gewicht der Ständer begrenzt bleiben. Oben am Innenrohr werden verschieden konfigurierte Lastarme, z.B. in gerader, abgewinkelter, gebogener oder abgestufter Geometrie zum Anhängen der Artikel vorgesehen. Die Lastarme könnten auch eine Ablage aufnehmen, worin die Artikel liegend gelagert werden. Solcherart Ständer sind insbesondere aus dem Shopbereich bekannt.

### Stand der Technik

Zunächst wurden Mechaniken für eine schrittweise Höhenverstellbarkeit, über einen durch ein Raster unterteilten Auszugsbereich, vorgeschlagen. Eine solche Mechanik ist aus der GB 201 344 bekannt, wo ein federgelagerter Druckknopf durch seine Vorspannung stets in ein der gewählten Auszugshöhe zugeordnetes Loch eines Rasters im Innenrohr durch das Aussenrohr hindurch eingreift. Beim Lösen der Arretierung kommt die Rastnase mit dem belegten Loch ausser Eingriff, so dass sich das Innenrohr in eine neu bestimmte Position verschieben oder gänzlich herausziehen lässt. Diese Mechanik erfordert einerseits das Zugreifen mit beiden Händen, nämlich für die Betätigung des seitlich - ähnlich einer Bride - angeordneten Druckknopfes und für das vertikale Verschieben des Innenrohrs. Andererseits stört die äussere, augenfällige massive Mechanik.

Eine auf ähnlichem Prinzip basierende Konstruktion für die rastermässige Höhenverstellung ist in der CH 680 942 A5 offenbart, wobei hier jedoch die Mechanik optisch weniger wahrnehmbar am Ständer angebracht ist. Ein durch eine Feder vorgespanntes Rastelement ist in einem zuoberst des Aussenrohrs angeordneten Flansch eingesetzt. Zum Lösen der Arretierung bedarf es des Herausziehens des Rastelements, welches dann ausser Eingriff mit dem zuvor belegten Loch innerhalb des am Innenrohr vorhandenen Rasters kommt. Eine insbesondere vom gestalterischen Standpunkt verbesserte Mechanik dieser Gattung mit abgestufter Verstellbarkeit, wird in der EP 0 182 169 B1 gezeigt, wo das zu betätigende Arretierorgan in einem noch kleiner dimensionierten Flansch, der das verschiebliche Innenrohr radial umfasst, untergebracht ist.

Eine weitere abgestuft wirkende Verstellmechanik ist in der EP 0 181 584 B1 beschrieben. Ein zuoberst des Aussenrohrs aufgesetzter, mit seitlichem Spiel beweglicher, selbsthemmender Klemmring besitzt eine nach innen gerichtete Nase, die im arretierten Zustand in ein gewähltes Loch im Innenrohr eingreift.

Aus der CH 617 078 A5 ist eine stufenlos verstellbare Arretiermechanik bekannt, wo im Innenrohr axial eine federgelagerte Auslösestange geführt wird, die zuoberst mit einem Druckknopf endet. Ein Walzenkörper blockiert durch Reibschluss an der Innenwandung des Aussenrohrs die Verstellung des Innenrohrs. Mit Betätigung der Auslösestange wird der Walzenkörper von der Innenwandung entfernt und somit die Verschiebung freigegeben.

Nicht bei allen Anwendungen sind die stufenlos verstellbaren Mechaniken von Vorteil, da bei Aufstellung mehrerer benachbarter Ständer, zeitaufwendig grosse Sorgfalt für eine gleiche oder systematisch unterschiedliche Auszugshöhe an den Ständern aufzubringen ist. Andernfalls kann ein unordentlicher Eindruck entstehen. Die bekannten rastermässig verstellbaren Mechaniken basieren auf das Innenrohr umfassenden Bauteilen, erfordern daher das Zugreifen mit beiden Händen, sind optisch auffälliger und weisen nicht immer ausreichende, Stabilität vermittelnde Spielfreiheit auf.

In der GB 2 194 435 A ist ein in Stufen höhenverstellbarer Prässntationsständer gemäss dem Oberbegriff des unabhängigen Anspruchs 1 offenbart.

### Aufgabe der Erfindung

Angesichts der Unvollkommenheiten bisher existenter Arretiermechaniken für höhenverstellbare Ständer aus teleskopisch ineinander verschiebbaren Rohren, liegt der Erfindung die Aufgabe zugrunde, eine verbesserte Mechanik für die schrittweise, einem Raster folgende Höhenverstellbarkeit, vorzuschlagen. Erfordernisse hierbei sind ein umkompliziertes Handling beim Verstellen, die sichere und möglichst spielfreie Arretierung in der gewählten Position des die Last tragenden Innenrohrs, die Erfüllung von ästhetischen Aspekten sowie schliesslich ein geringer Material- und Herstellungsaufwand zur Einhaltung niedriger Produktions- und Montagekosten bei der Serienfertigung. Somit sollen möglichst wenige und effizient herstellbare Teile die zu schaffende Mechanik bilden.

### Übersicht über die Erfindung

Der höhenverstellbare Ständer dient zum Anhängen von Artikeln oder zur Halterung einer Ablage zur liegenden Aufbewahrung von Artikeln. Der Ständer hat ein an einer Tragstruktur fixiertes, vorzugsweise senkrecht stehendes Aussenrohr, das einen inneren Kanal besitzt, der sich zum oberen Ende und zum unteren Ende des Aussenrohrs erstreckt. Ferner ist ein Innenrohr vorgesehen, das sich im Aussenrohr teleskopisch verschieben lässt. Das Innenrohr hat einen inneren Kanal, der sich zum oberen Ende und zum unteren Ende des Innenrohrs erstreckt. Am oberen Ende des Innenrohrs setzt ein Lastarm an. Axial im Innenrohr ist eine Auslösestange angeordnet, die in einem Betätigungselement endet, welches am oberen Ende des Innenrohrs von aussen zugänglich ist Die Auslösestange wirkt auf ein Verriegelungsteil zur Arretierung zwischen Innenrohr und Aussenrohr. Die Kennzeichen des erfindungsgemässen Ständers sind, dass im Aussenrohr ein vertikal verlaufendes - Raster mit systematisch übereinander liegenden Löchern vorhanden ist und das Verriegelungsteil ein Stellelement aufweist, welches vorn Innenrohr her zum Eingriff in das Raster am Aussenrohr bestimmt ist.

Das Verriegelungsteil ist unter elastischer Vorspannung innerlich des Innenrohrs angeordnet Diese Vorspannung bewirkt die federnde Lagerung der Auslösestange und drückt zugleich auf das Stellelement.

Das Betätigungselement ragt vorzugsweise axial oder als Alternative seitlich in einer Öffnung aus dem oberen Ende des Innenrohrs heraus. Das Verriegelungsteil ist im unteren Ende des Innenrohrs angeordnet. Es stützt sich einerseits mit einem Zapfen in einer Aussparung im unteren Ende des Innenrohrs ab. Andererseits unterfasst es mit einem Steg die Wandungskante eines Durchbruchs am unteren Ende des Innenrohrs. Unterhalb des Steges ragt das überstehende Stellelement hervor. Der Durchbruch ist vorzugsweise nach unten hin offen, und die Wandungskante verläuft zumindest im Prinzip horizontal. Die Federwirkung des Veniegelungsteils wird von seinem gebogenen Basiskörper hervorgerufen. Die Vorspannung des Basiskörpers im Innenrohr wird durch elastische Verformung entgegen der eigenen Krümmung des Basiskörpers generiert.

Auf dem Basiskörper ist eine Steckaufnahme zum Einstecken des unteren Endes der Auslösestange vorhanden. Die Steckaufnahme nimmt das untere Ende der Auslösestange elastisch rastend auf. Die Steckaufnahme besteht oben aus einer nach vorn offenen, elastisch spreizbaren Umklammerung und unten aus einem Sockel, in dem das untere Ende der Auslösestange aufsitzt. Unterhalb der Umklammerung ist ein Hinterschnitt vorhanden, der von am unteren Ende der Auslösestange vorgesehenen Rückhalteelementen unterfasst wird. Bei der Montage lässt sich das untere Ende der Auslösestange zunächst schräg in den Sockel einsetzen und dann kann die Auslösestange in vertikale Ausrichtung gebracht werden. Die Rüdchalteelemente am unteren Ende der Auslösestange sind paarweise, ohrenförmig ausgebildete Anformungen. Im Sockel bildet ein muldenförmiges Lager den Stecksitz für das untere Ende der Auslösestange. Im Sockel bietet eine Kavität Raum beim zunächst schrägen Einsetzen der Auslösestange.

Das aus der Steckaufnahme und dem Basiskörper bestehende Verriegelungsteil weist folgende Teile auf. Am Basiskörper ist ein Vertikalsteg als Rückenstütze der Umklammerung vorhanden. Ein Sitzsteg bildet den Untergrund für den Sockel der Steckaufnahme. Ein abwärts weisender Ansatz geht in den Quersteg über. Unterhalb des Querstegs verläuft ein nach vorn gerichtetes Stellelement. Die Federwirkung des Verriegelungsteils wird im wesentlichen vorn Ansatz und dessen Übergang zum Sitzsteg geliefert. Optional kann unterhalb des Querstegs ein sich nach rückwärts erstreckender Flügel vorhanden sein, der in gelöster Stellung des Verriegelungsteils als Anschlag an der Innenwand des Innenrohrs ansteht. Vorteilhaft ist das Verriegelungsteil als ein einteiliges Kunststoffspritzteil ausgebildet. Vorzugsweise besitzt das Stellelement einen metallischen Einsatz, der in arretierter Stellung des Verriegelungsteils im gewählten Loch im Aussenrohr zu liegen kommt.

Das Innenrohr und das Aussenrohr weisen in einer Ausführungsform des Ständers einen rechteckigen, vorzugsweise quadratischen Querschnitt auf. In einer anderen Ausführungsform des Ständers haben das Innen- und das Aussenrohr einen rundlichen, vorzugsweise kreisrunden Querschnitt. Am unteren Ende des Aussenrohrs ist ein Anschlag zur Begrenzung der maximalen Einschubtiefe des Innenrohrs vorhanden, wobei der Anschlag z.B. durch einen Querstift oder nach innen gerichtete Eindrücke gebildet wird. Bei einem runden Querschnitt des Innen- und Aussenrohrs kann am unteren Ende des Aussenrohrs ein sich nach unten verjüngender Konusabschnitt angesetzt sein, der zum Einstecken in eine komplementäre Aufnahme einer Tragstruktur, z.B. eine Podestplatte, bestimmt ist. Der Konusabschnitt kann Rotationssicherungskonturen - z.B. in Gestalt von nach unten offenen Langlöchern - aufweisen. In arretierter Stellung des Verriegelungsteils kommt die Frontpartie des Querstegs in der Aussparung des Innenrohrs zu liegen und wird dabei zwischen seitlichen Wandungskanten aufgenommen.

Zwischen dem Aussenrohr und dem Innenrohr, nämlich zwischen deren Wandflächen mit dem Raster bzw. der Aussparung, ist ein Spalt vorhanden, der sich U-förmig nach hinten erstreckt, bei rechteckigem Querschnitt von Innen- und Aussenrohr hin zu den beiden angrenzenden Wandungen. Der Quersteg des Basiskörpers des Verriegelungsteils verläuft von der Wandfläche mit der Aussparung hin zur Wandfläche mit dem Durchbruch schräg aufsteigend. Bei axialer steigender Belastung des Innenrohrs wird ein zunehmendes Andrücken des Innenrohrs mit dessen Wandfläche, die den Durchbruch aufweist, an die anliegende Wandfläche des Aussenrohrs bewirkt, wodurch sich zwischen diesen Flächen die Haftreibung erhöht.

Dank der Erfindung steht nun ein höhenverstellbarer Ständer auf dem definierten Anwendungsgebiet zur Verfügung, wo sich die Höhenverstellung mit einer Hand unkompliziert vornehmen lässt. Die Mechanik ist bis auf den optisch kaum wahrnehmbaren, oben axial herausragenden Druckknopf in den beiden Rohren - dem Aussen- und das Innenrohr - völlig integriert. Die Rasterung erleichtert die Schaffung eines einheitlichen Bildes, mit gleichhoch ausgezogenen Innenrohren, bei Aufstellung mehrerer Ständer in einem Areal. Ferner ermöglicht die Mechanik Kostenvorteile bei der Produktion des Ständers.

### Kurzbeschreibung der beigefügten Zeichnungen

Es zeigen:

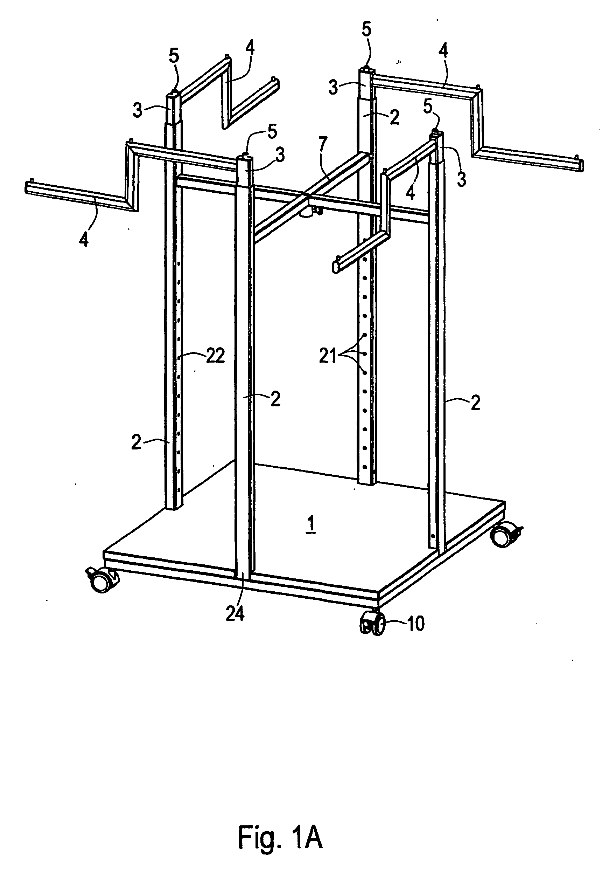

- Figur 1A:: eine verfahrbare Bodenplatte mit mehreren miteinander verbundenen erfindungsgemässen Ständern mit rechteckigem Querschnitt, in Perspektivansicht;

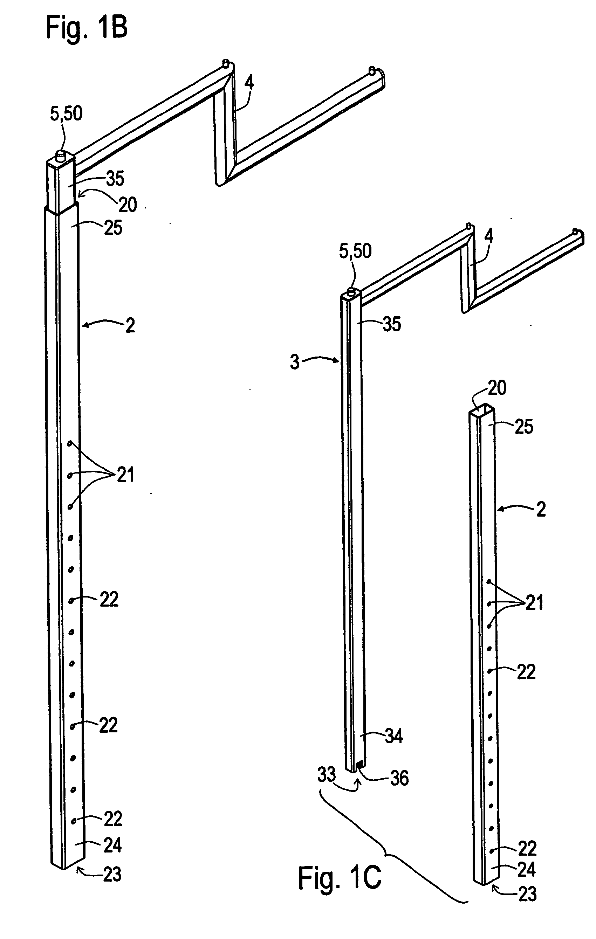

- Figur 1B:: einen einzelnen Ständer aus Figur 1A, in Perspektivansicht;
- Figur 1C:: ein Aussenrohr und ein völlig ausgezogenes Innenrohr mit daran oben angeordnetem abgestuftem Lastarm gemäss Figur 1A;
- Figur 2A:: ein Verriegelungsteil der *ersten Variante* für einen Ständer mit rechteckigem Querschnitt, in Perspektivansicht;
- Figur 2B:: das Verriegelungsteil *erster Variante* gemäss Figur 2A, in gewechselter Perspektive;
- Figur 3A:: das Verriegelungsteil *erster Variante* gemäss Figur 2A mit angenäherter Auslösestange, in Perspektivansicht;
- Figur 3B:: die Anordnung gemäss Figur 3A, in Seitenansicht;
- Figur 4A:: das Verriegelungsteil *erster Variante* gemäss Figur 2A mit eingesteckter, noch nicht in der Endlage sich befindender Auslösestange, in Perspektivansicht;
- Figur 4B:: die Anordnung gemäss Figur 4A, in Seitenansicht;
- Figur 5A:: die Anordnung gemäss Figur 4A mit eingesteckter, aufgerichteter Auslösestange, in Perspektivansicht;
- Figur 5B:: die Anordnung gemäss Figur 5A**,** mit nicht vorgespanntem Verriegelungsteil *erster Variante,* in Seitenansicht;
- Figur 6A:: die Anordnung gemäss Figur 5A mit angenähertem unterem Ende eines Innenrohrs vor dem Einsetzen der Mechanik, in Perspektivansicht;
- Figur 6B:: die Anordnung gemäss Figur 6A, mit vorgespanntem Verriegelungsteil *erster Variante* zum Einsetzen der Mechanik in das untere Ende des Innenrohrs, in Perspektivansicht;
- Figur 7A:: die Anordnung gemäss Figur 6A mit in das Innenrohr eingesetzter Mechanik, in Perspektivansicht;
- Figur 7B:: die Anordnung gemäss Figur 7A, in gewechselter Perspektive;
- Figur 7C:: die Anordnung gemäss Figur 7A, in Seitenansicht;

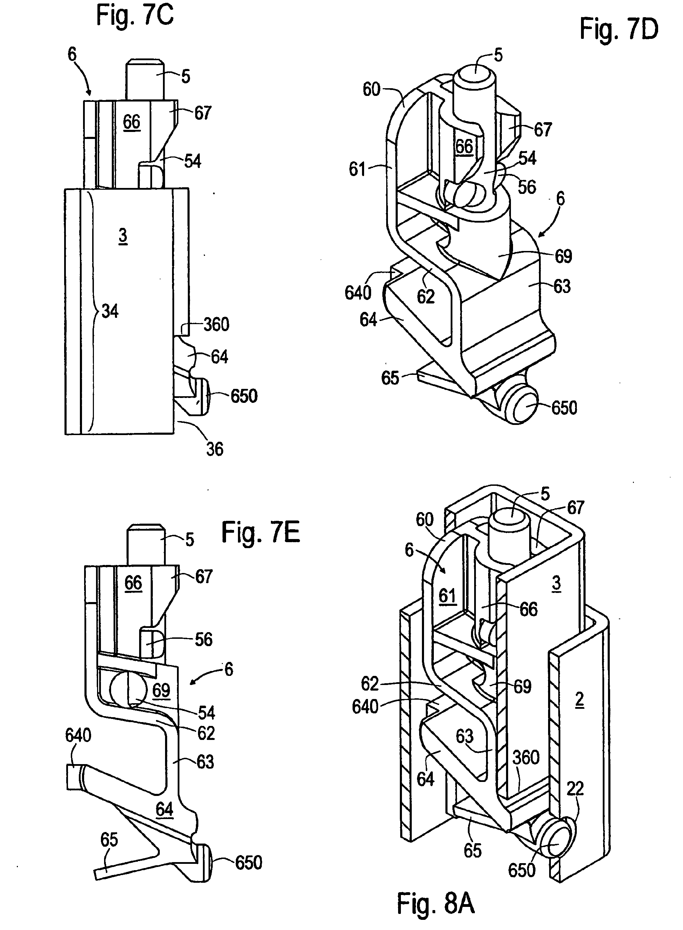

- Figur 7D:: das Verriegelungsteil *erster Variante* mit der eingesetzten Auslösestange aus Figur 7A in der Vorspannung gemäss Einbaulage, in Perspektivansicht;
- Figur 7E:: die Anordnung gemäss Figur 7D, in Seitenansicht;
- Figur 8A:: das Innenrohr in ein Aussenrohr eingeschoben, im arretierten Zustand, im vertikalen perspektivischen Teilschnitt;

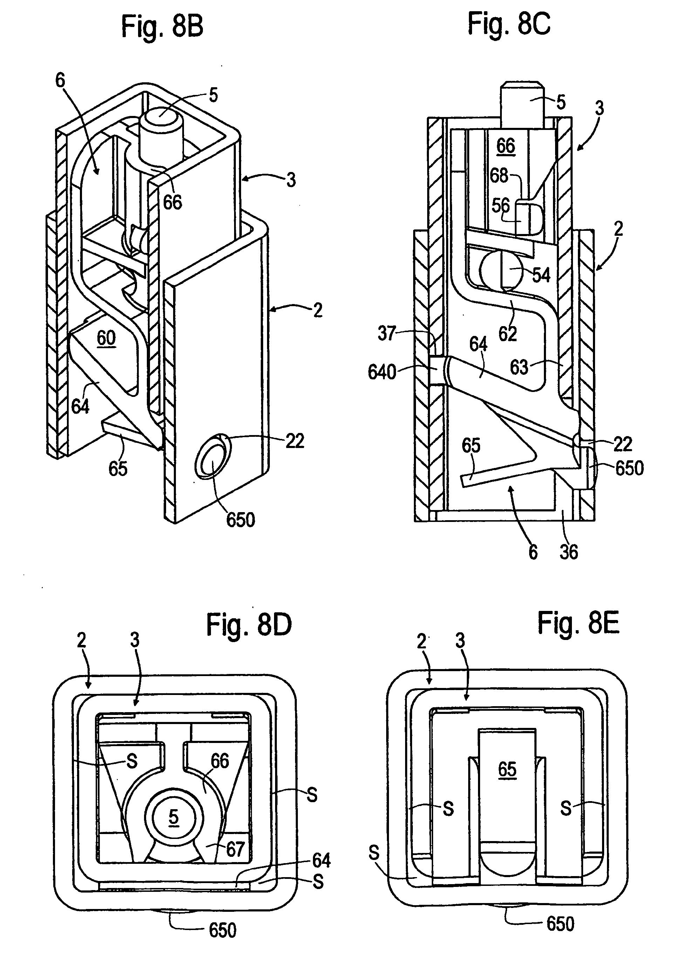

- Figur 8B:: die Anordnung gemäss Figur 8A, in gewechselter Perspektive;
- Figur 8C:: die Anordnung gemäss Figur 8A, im vertikalen Teilschnitt, als Seitenansicht;
- Figur 8D:: die Anordnung gemäss Figur 8A, im horizontalen Schnitt, im Bereich der Umklammerung der Steckaufnahme des Verriegelungsteils *erster Variante;*
- Figur 8E:: einen Schnitt wie Figur 8D, im Bereich der Aussparung am Innenrohr, oberhalb des in das Aussenrohr eingreifenden Stellelements des Verriegelungsteils *erster Variante;*

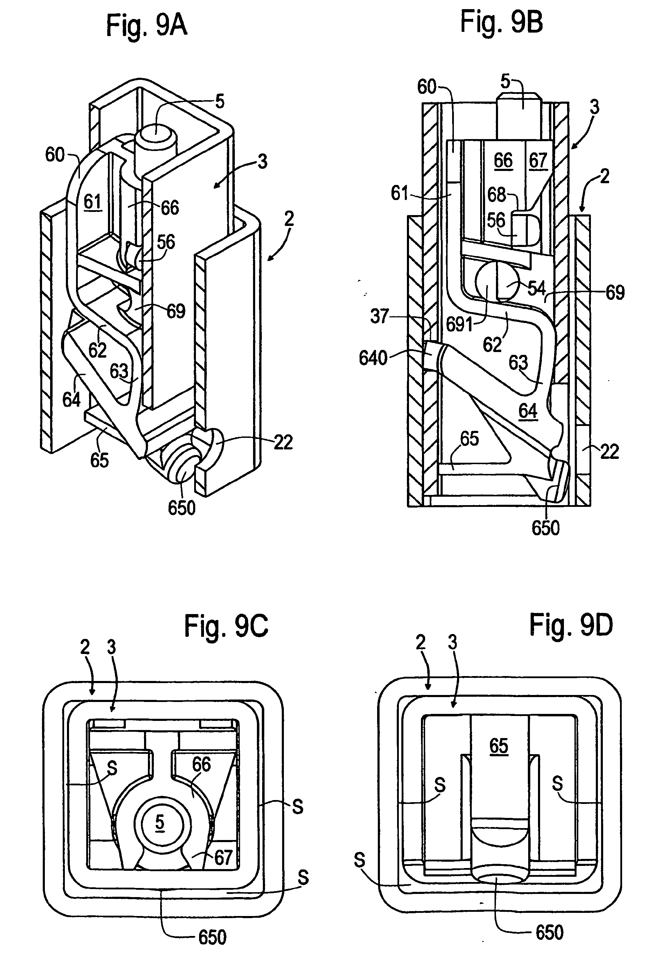

- Figur 9A:: die Anordnung gemäss Figur 8A, im entriegelten Zustand, im vertikalen perspektivischen Teilschnitt;
- Figur 9B:: die Anordnung gemäss Figur 9A, im vertikalen Teilschnitt, als Seitenansicht;
- Figur 9C:: die Anordnung gemäss Figur 9A, im horizontalen Schnitt, im Bereich der Umklammerung der Steckaufnahme des Verriegelungsteils *erster Variante;*
- Figur 9D:: einen Schnitt wie Figur 9C, im Bereich der Aussparung am Innenrohr, oberhalb des aus dem Aussenrohr entfernten Stellelements des Verriegelungsteils *erster Variante;*
- Figur 10A:: die Anordnung gemäss Figur 9A, im entriegelten Zustand, bei Positionsverschiebung des Innenrohrs nach oben, im vertikalen perspektivischen Teilschnitt;
- Figur 10B:: die Anordnung gemäss Figur 10A, im vertikalen Teilschnitt, als Seitenansicht;

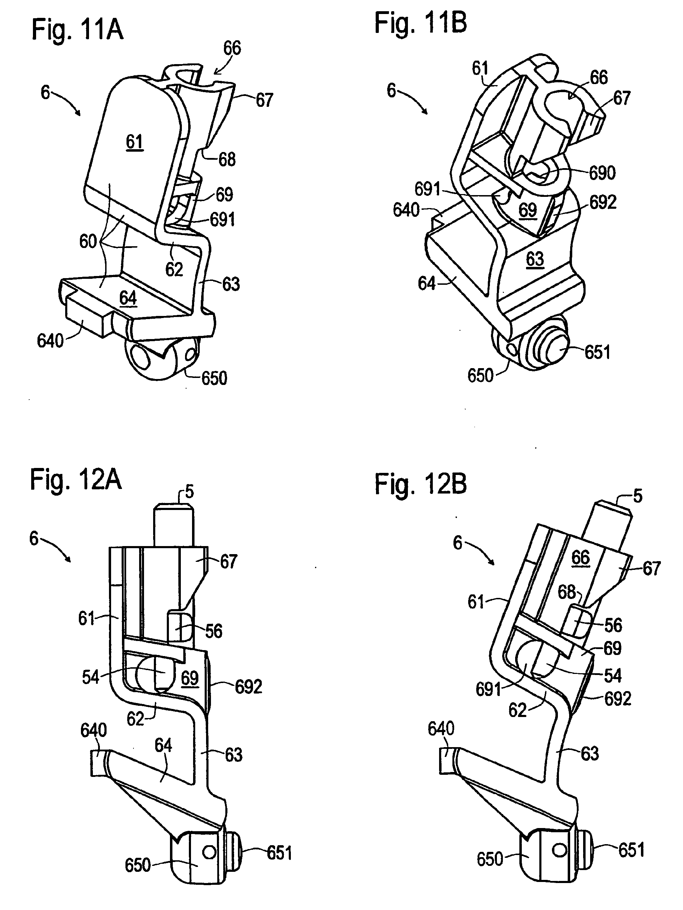

- Figur 11A:: ein Verriegelungsteil der *zweiter Variante* für einen Ständer mit rechteckigem Querschnitt, in Perspektivansicht;
- Figur 11B:: das Verriegelungsteil *zweiter Variante* gemäss Figur 11A, in gewechselter Perspektive;
- Figur 12A:: das Verriegelungsteil *zweiter Variante* mit eingesteckter, aufgerichteter Auslösestange aus Figur 5A in der Vorspannung gemäss Einbaulage, in Seitenansicht;
- Figur 12B:: die Anordnung gemäss Figur 12A, mit nicht vorgespanntem Verriegelungsteil *zweiter Variante,* in Seitenansicht;

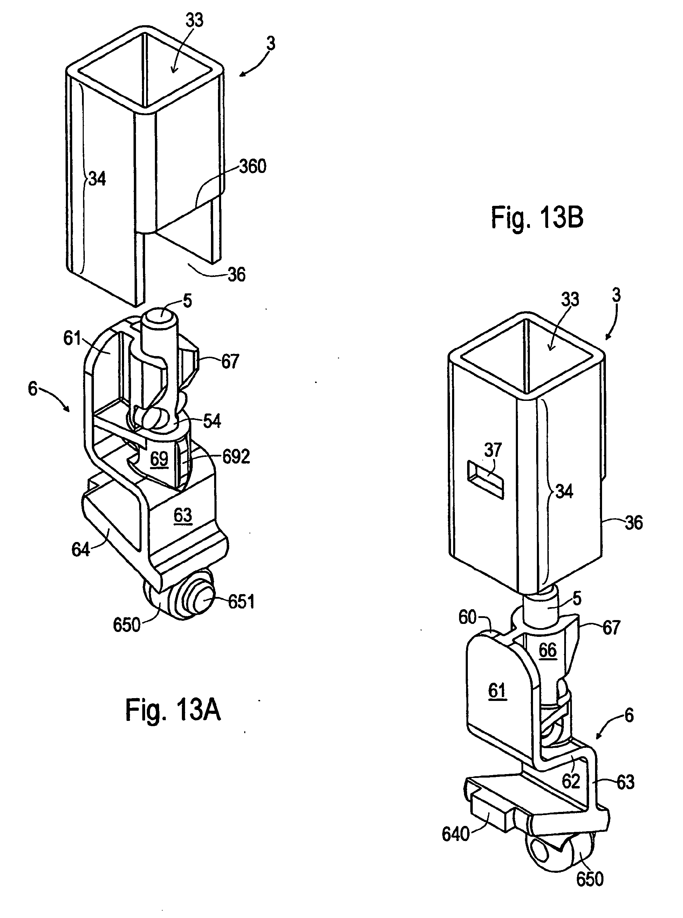

- Figur 13A:: die Anordnung gemäss Figur 12A mit angenähertem unterem Ende eines Innenrohrs vor dem Einsetzen der Mechanik, in Perspektivansicht;
- Figur 13B:: die Anordnung gemäss Figur 13A, in gewechselter Perspektive;

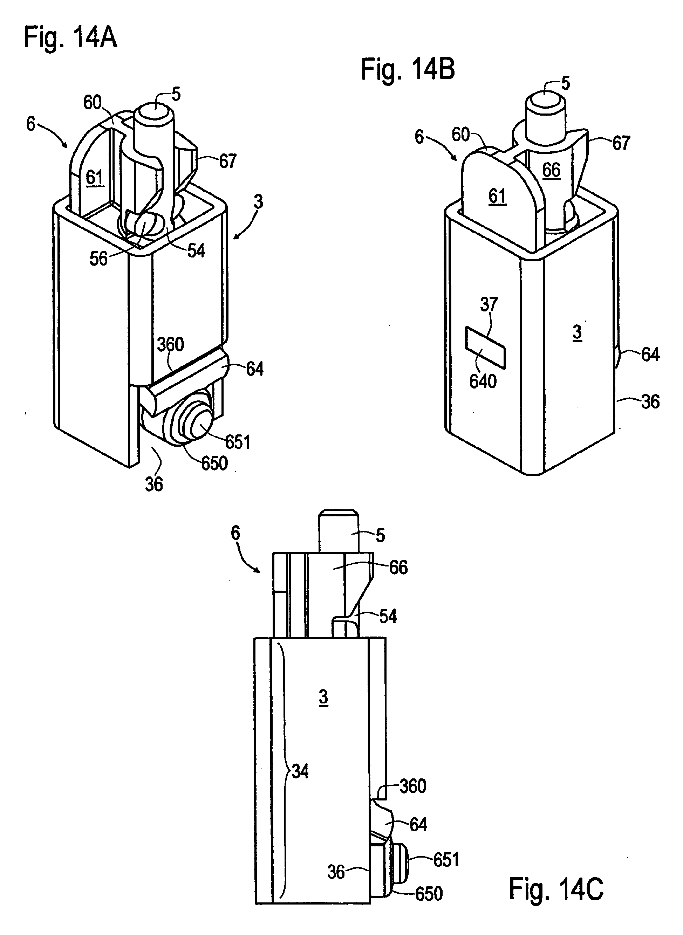

- Figur 14A:: die Anordnung gemäss Figur 13A mit in das Innenrohr eingesetzter Mechanik, in Perspektivansicht;
- Figur 14B:: die Anordnung gemäss Figur 14A, in gewechselter Perspektive;
- Figur 14C:: die Anordnung gemäss Figur 14A, in Seitenansicht;

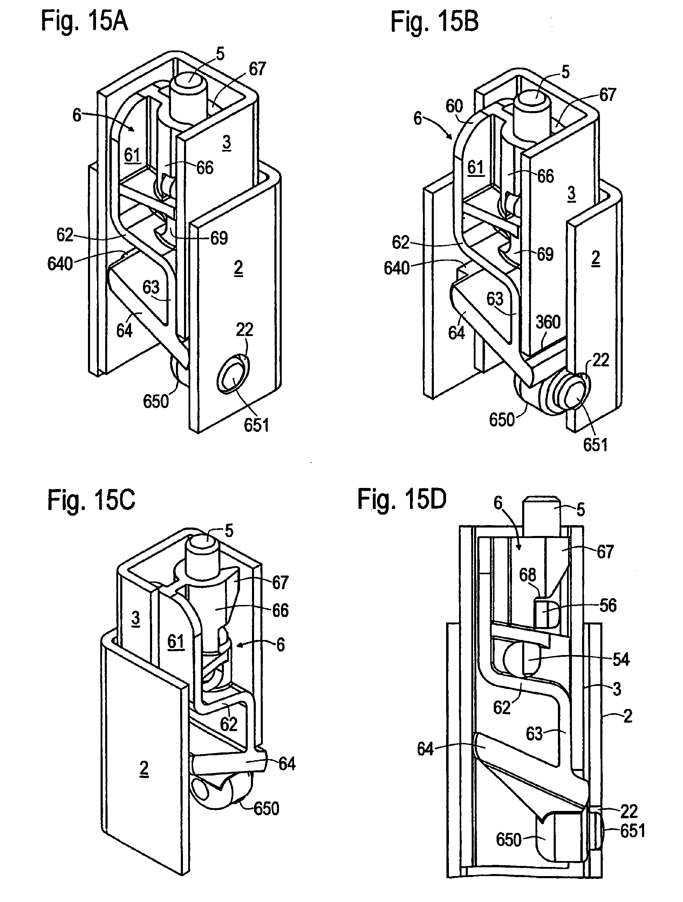

- Figur 15A:: die Anordnung gemäss Figur 14A mit dem Innenrohr in ein Aussenrohr eingeschoben, im arretierten Zustand, im vertikalen perspektivischen Teilschnitt;
- Figur 15B:: die Anordnung gemäss Figur 15A, im vertikalen Teilschnitt, in gewechselter Perspektive;
- Figur 15C:: die Anordnung gemäss Figur 15A, im vertikalen Teilschnitt, in erneut gewechselter Perspektive;
- Figur 15D:: die Anordnung gemäss Figur 15A, im vertikalen Teilschnitt, als Seitenansicht;

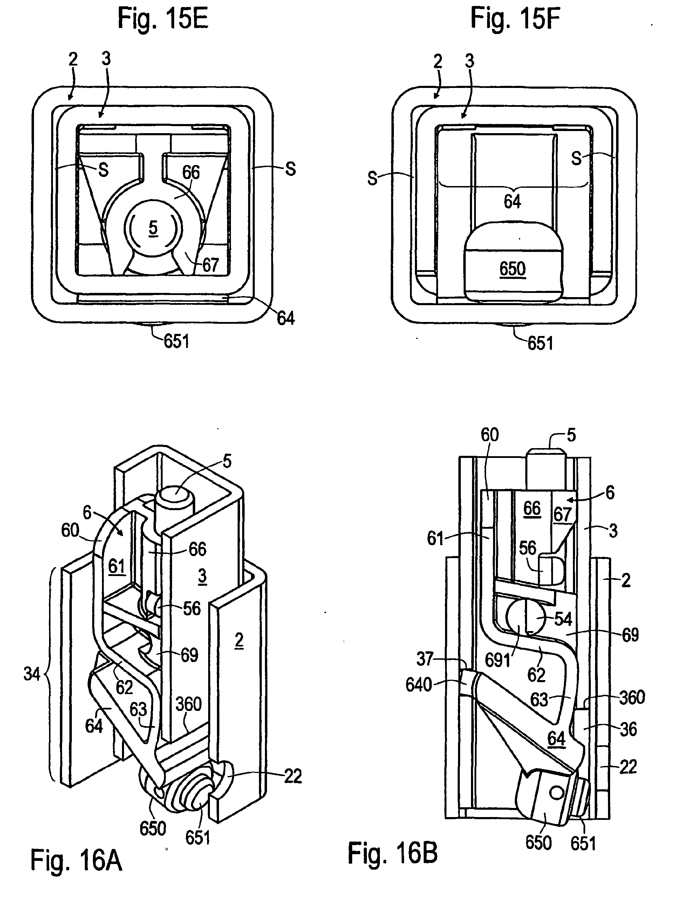

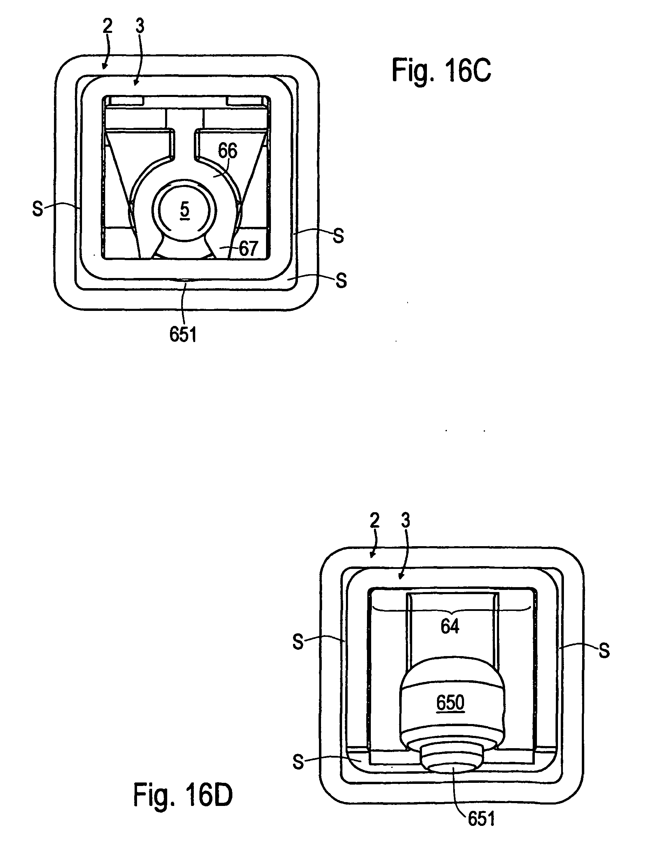

- Figur 15E:: die Anordnung gemäss Figur 15A, im horizontalen Schnitt, im Bereich der Umklammerung der Steckaufnahme des Verriegelungsteils *zweiter Variante;*
- Figur 15F:: einen Schnitt wie Figur 15E, im Bereich der Aussparung am Innenrohr, oberhalb des in das Aussenrohr eingreifenden Stellelements des Verriegelungsteils *zweiter Variante;*
- Figur 16A:: die Anordnung gemäss Figur 15A, im entriegelten Zustand, im vertikalen perspektivischen Teilschnitt;
- Figur 16B:: die Anordnung gemäss Figur 16A, im vertikalen Teilschnitt, als Seitenansicht;
- Figur 16C:: die Anordnung gemäss Figur 16A, im horizontalen Schnitt, im Bereich der Umklammerung der Steckaufnahme des Verriegelungsteils *zweiter Variante;*
- Figur 16D:: einen Schnitt wie Figur 16C, im Bereich der Aussparung am Innenrohr, oberhalb des aus dem Aussenrohr entfernten Stellelements des Verriegelungsteils *zweiter Variante;*

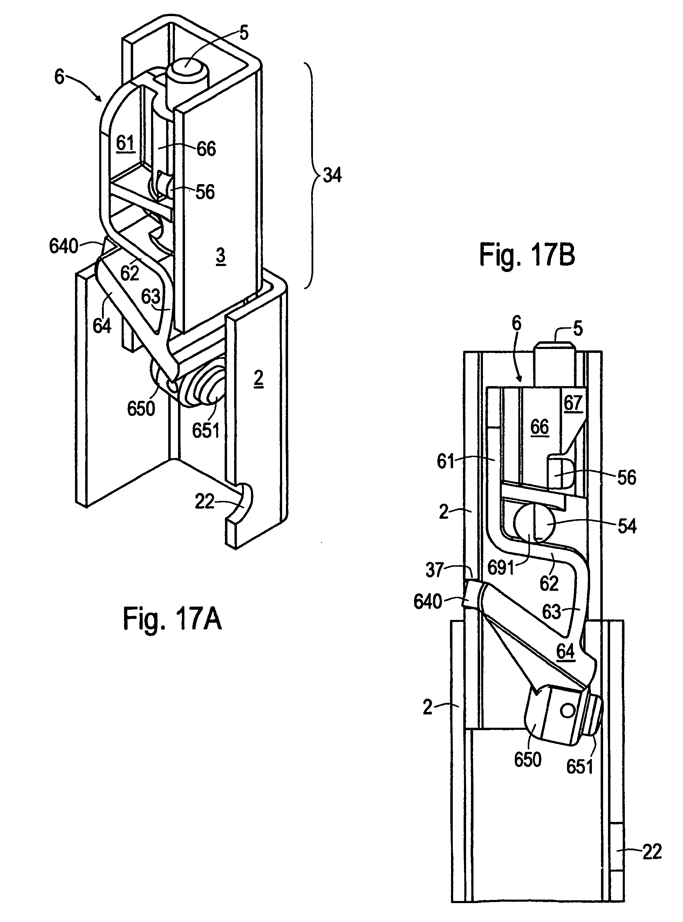

- Figur 17A:: die Anordnung gemäss Figur 16A, im entriegelten Zustand, bei Positionsverschiebung des Innenrohrs nach oben, im vertikalen perspektivischen Teilschnitt;
- Figur 17B:: die Anordnung gemäss Figur 17A, im vertikalen Teilschnitt, als Seitenansicht;

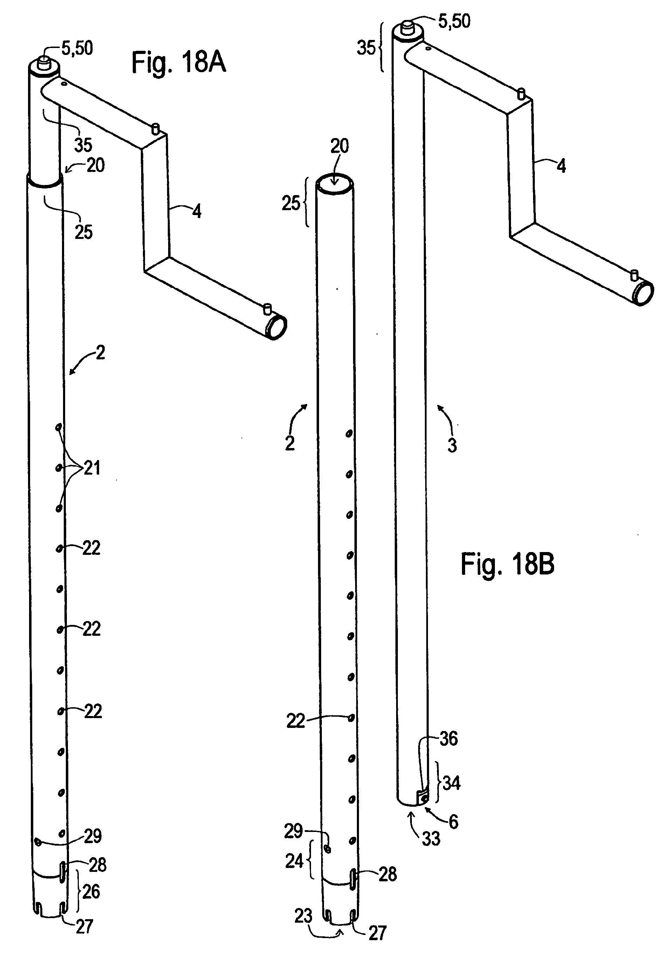

- Figur 18A:: einen einzelnen Ständer mit rundem Querschnitt, in Perspektivansicht;
- Figur 18B:: ein Aussenrohr und ein völlig ausgezogenes Innenrohr mit daran oben angeordnetem abgestuftem Lastarm gemäss Figur 18A;

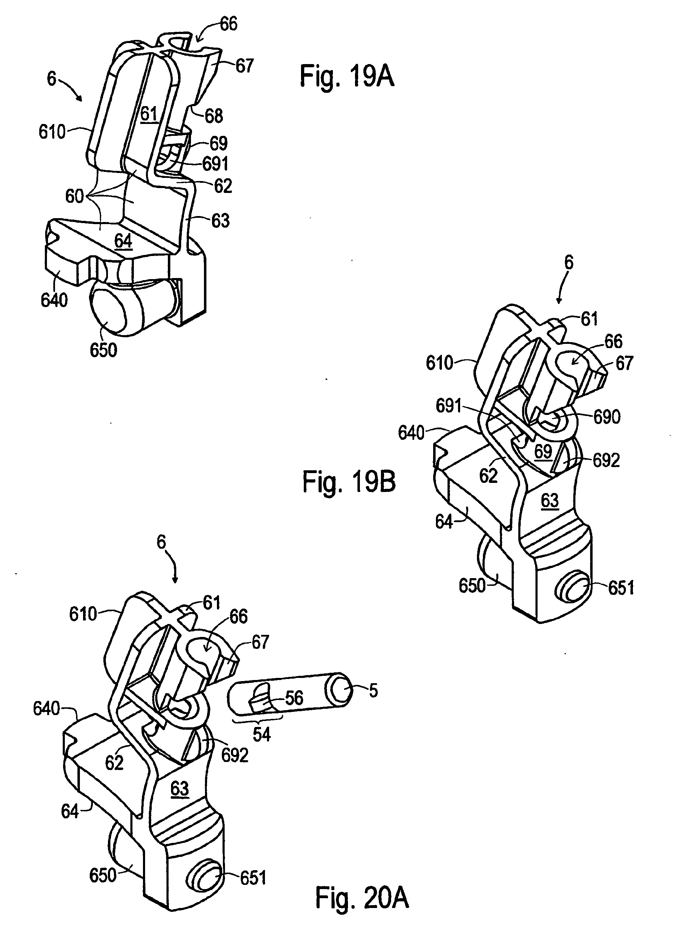

- Figur 19A:: ein Verriegelungsteil der *dritten Variante* für einen Ständer mit rundem Querschnitt, in Perspektivansicht;
- Figur 19B:: das Verriegelungsteil *dritter Variante* gemäss Figur 19A, in gewechselter Perspektive;
- Figur 20A:: das Verriegelungsteil *dritter Variante* gemäss Figur 19A mit angenäherter Auslösestange, in Perspektivansicht;

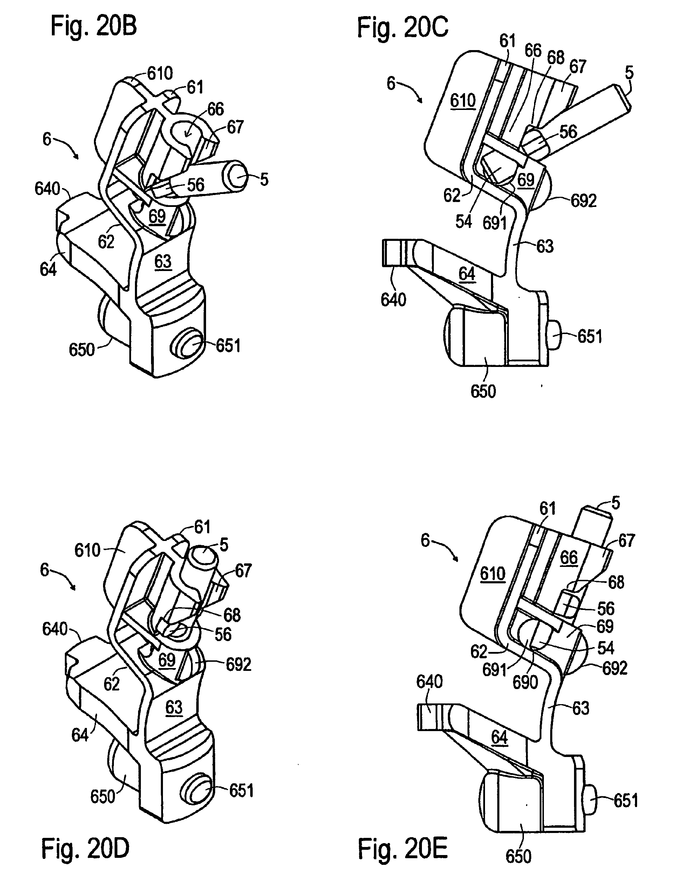

- Figur 20B:: das Verriegelungsteil *dritter Variante* gemäss Figur 19A mit eingesteckter, noch nicht in der Endlage sich befindender Auslösestange, in Perspektivansicht;
- Figur 20C:: die Anordnung gemäss Figur 20B, in Seitenansicht;
- Figur 20D:: die Anordnung gemäss Figur 20B mit nicht vorgespanntem Verriegelungsteil *dritter Variante,* mit eingesteckter, aufgerichteter Auslösestange, in Perspektivansicht;
- Figur 20E:: die Anordnung gemäss Figur 20D, in Seitenansicht;
- Figur 21A:: die Anordnung gemäss Figur 20D mit angenähertem unterem Ende eines runden Innenrohrs vor dem Einsetzen der Mechanik mit bereits vorgespanntem Verriegelungsteil *dritter Variante,* in Perspektivansicht;
- Figur 21B:: die Anordnung gemäss Figur 21A, in gewechselter Perspektivansicht;
- Figur 21C:: die Anordnung gemäss Figur 21A, in Seitenansicht;
- Figur 22A:: die Anordnung gemäss Figur 21A mit in das Innenrohr eingesetzter Mechanik, mit dem Verriegelungsteil *dritter Variante,* im arretierten Zustand, in Perspektivansicht;
- Figur 22B:: die Anordnung gemäss Figur 22A, in gewechselter Perspektivansicht;
- Figur 22C:: die Anordnung gemäss Figur 22A, in Seitenansicht;
- Figur 22D:: die Anordnung gemäss Figur 22A mit dem Verriegelungsteil *dritter Variante,* im entriegelten Zustand, in Perspektivansicht;
- Figur 23A:: die Anordnung gemäss Figur 22A in ein rundes Aussenrohr eingeschoben, im arretierten Zustand, in Perspektivansicht;
- Figur 23B:: die Anordnung gemäss Figur 23A, im vertikalen perspektivischen Teilschnitt;
- Figur 23C:: den Teilschnitt gemäss Figur 23B, in gewechselter Perspektive;
- Figur 23D:: den Teilschnitt gemäss Figur 23B, in Seitenansicht;
- Figur 23E:: die Anordnung gemäss Figur 23A, im horizontalen Schnitt, im Bereich der Umklammerung der Steckaufnahme des Verriegelungsteils *dritter Variante;*
- Figur 23F:: einen Schnitt wie Figur 23E, im Bereich der Aussparung am Innenrohr, oberhalb des in das Aussenrohr eingreifenden Stellelements des Verriegelungsteils *dritter Variante;*
- Figur 24A:: die Anordnung gemäss Figur 23A, im entriegelten Zustand, im vertikalen perspektivischen Teilschnitt;
- Figur 24B:: die Anordnung gemäss Figur 24A, im vertikalen Teilschnitt, als Seitenansicht;
- Figur 24C:: die Anordnung gemäss Figur 24A, im horizontalen Schnitt, im Bereich der Umklammerung der Steckaufnahme des Verriegelungsteils *dritter Variante;*
- Figur 24D:: einen Schnitt wie Figur 24C, im Bereich der Aussparung am Innenrohr, oberhalb des aus dem Aussenrohr entfernten Stellelements des Verriegelungsteils *dritter Variante;*
- Figur 25A:: die Anordnung gemäss Figur 23A, im entriegelten Zustand, bei Positionsverschiebung des Innenrohrs nach oben, im vertikalen perspektivischen Teilschnitt; und
- Figur 25B:: die Anordnung gemäss Figur 25A, im vertikalen Teilschnitt, als Seitenansicht.

### Ausführungsbeispiele

Nachstehend erfolgt die detaillierte Beschreibung von Ausführungsbeispielen zum erfindungsgemässen höhenverstellbaren Ständer und zu den dabei verwendeten Bauteilen. Bei rechteckigem Querschnitt von Innen- und Aussenrohr kommen eine *erste* und eine *zweite Variante* des Verriegelungsteils zum Einsatz, während bei rundem Querschnitt von Innen- und Aussenrohr eine *dritte Variante* des Verriegelungsteils vorgesehen ist

Für die gesamte weitere Beschreibung gilt folgende Festlegung. Sind in einer Figur zum Zweck zeichnerischer Eindeutigkeit Bezugsziffern enthalten, aber im unmittelbar zugehörigen Beschreibungstext nicht erläutert, so wird auf deren Erwähnung in vorangehenden oder nachfolgenden Figurenbeschreibungen Bezug genommen. Im Interesse der Übersichtlichkeit wird auf die wiederholte Bezeichnung von Bauteilen in weiteren Figuren zumeist verzichtet, sofern zeichnerisch eindeutig erkennbar ist, dass es sich um "wiederkehrende" Bauteile handelt.

### Figuren 1A bis 1C

Der höhenverstellbare Ständer, welcher zum Anhängen von Artikeln oder zur Halterung einer Ablage zur liegenden Aufbewahrung von Artikeln konzipiert ist, besteht zunächst aus einem an einer Tragstruktur **1** fixierten, vorzugsweise senkrecht stehenden Aussenrohr **2,** das einen inneren Kanal **23** besitzt, der sich zum oberen Ende **25** und zum unteren Ende **24** des Aussenrohrs **2** erstreckt. Im Aussenrohr **2** ist ein teleskopisch verschiebbares Innenrohr **3** angeordnet, welches je nach Auszugsstellung mehr oder weniger aus der oberen Mündung **20** des Aussenrohrs **2** herausragt. Das Innenrohr **3** besitzt einen inneren Kanal **33,** der sich zum oberen Ende **35** und zum unteren Ende **34** des Innenrohrs **3** erstreckt. An seinem oberen Ende **35** weist das Innenrohr **3** einen Lastarm **4,** hier in abgestufter Geometrie, auf. Im Innenrohr **3** ist axial eine Auslösestange **5** angeordnet, die in einem Betätigungselement **50** endet, welches am oberen Ende **35** des Innenrohrs **3** von aussen zugänglich ist.

Die Auslösestange **5** wirkt auf ein Verriegelungsteil **6** zur Lösung der Arretierung zwischen Innenrohr **3** und Aussenrohr **2.** Im Aussenrohr **2** ist in einer ersten Wandung ein vertikal verlaufendes Raster **21** mit systematisch übereinander liegenden Löchern **22** vorhanden. Das Verriegelungsteil **6** sitzt im unteren Ende **34** des Innenrohrs **3,** wobei ein Stellelement **650** des Verriegelungsteils **6** aus der im unteren Ende **34** vorhanden Aussparung **36,** die nach unten offen ist, herausragt und vorn Innenrohr **3** her zum Eingriff in das Raster **21** bestimmt ist. Das Verriegelungsteil **6** ist unter elastischer Vorspannung innerlich des Innenrohrs **3** angeordnet. Diese Vorspannung bewirkt die federnde Lagerung der Auslösestange **5** und wirkt zugleich auf das Stellelement **650.** In der hiesigen Ausführungsform haben das Aussenrohr **2** und das Innenrohr **3** einen rechteckigen Querschnitt, und die Tragstruktur 1 wird von einer auf Rollen **10** gelagerten Bodenplatte **1** gebildet. Mehrere sich von der Bodenplatte **1** aufwärts erstreckende Ständer sind durch ein Strebenkreuz **7** miteinander verbunden.

### Figuren 2A und 2B

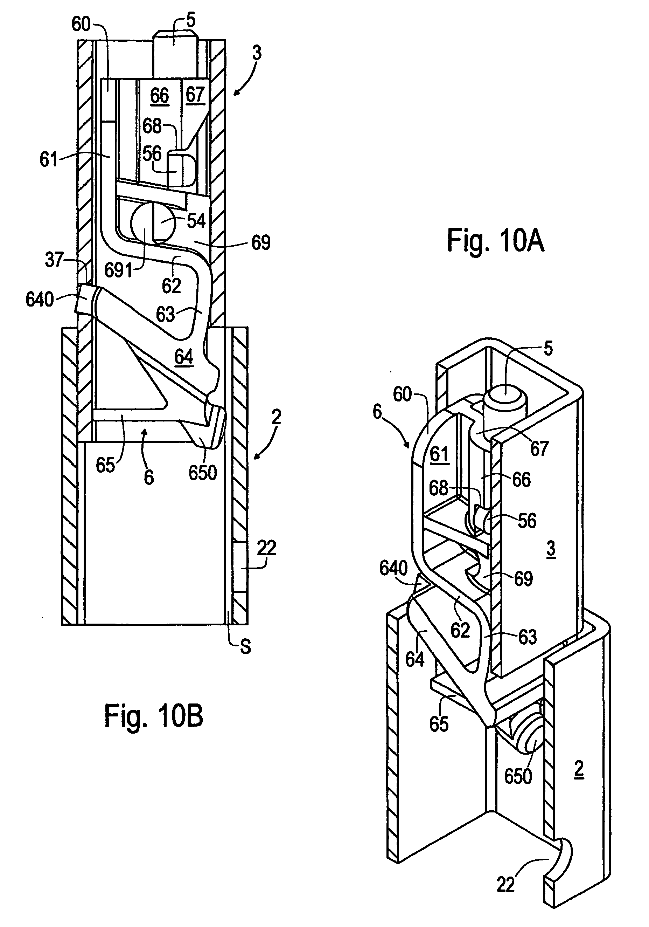

In diesem Figurenpaar und anschliessend bis zur Figur 10B wird ein Verriegelungsteil **6** *erster Variante* für Aussen- und Innenrohre **2,3** mit rechteckigem Querschnitt dargestellt. Das aus der Steckaufnahme **66** und dem Basiskörper **60** bestehende Verriegelungsteil **6,** welches vorteilhaft als einteiliges Kunststoffspritzteil gefertigt ist, weist folgende Anteile auf. Am Basiskörper **60** bildet ein Vertikalsteg **61** die Rückenstütze für eine Umklammerung **67.** Ein Sitzsteg **62** dient als Untergrund für den Sockel **69** der von oben zugänglichen Steckaufnahme **66.** Ferner ist ein abwärts weisender Ansatz **63,** der in den Quersteg **64** übergeht, vorhanden. Unterhalb des Querstegs **64** erstreckt sich ein nach rückwärts weisender Flügel **65** und nach vorn das Stellelement **650,** wobei der Quersteg **64** hinten einen Zapfen **640** besitzt. Die Federwirkung des Verriegelungsteils **6** wird im wesentlichen vorn Ansatz **63** und dessen Übergang zum Sitzsteg **62** geliefert. Unterhalb der Umklammerung **67** hat die Steckaufnahme **66** einen Hinterschnitt **68.** Der untere Bereich der Steckaufnahme **66** bildet ein Lager **690.** Nahe dem Boden der Steckaufnahme **66** weist der Sockel **69** einen inneren Freiraum **691** auf.

### Figuren 3A bis 5B

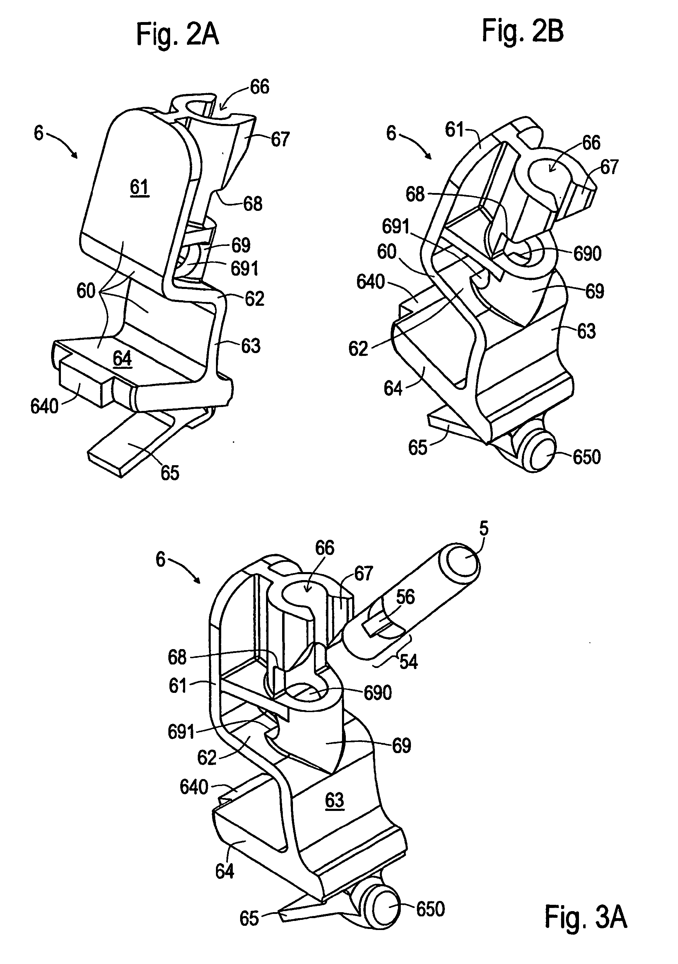

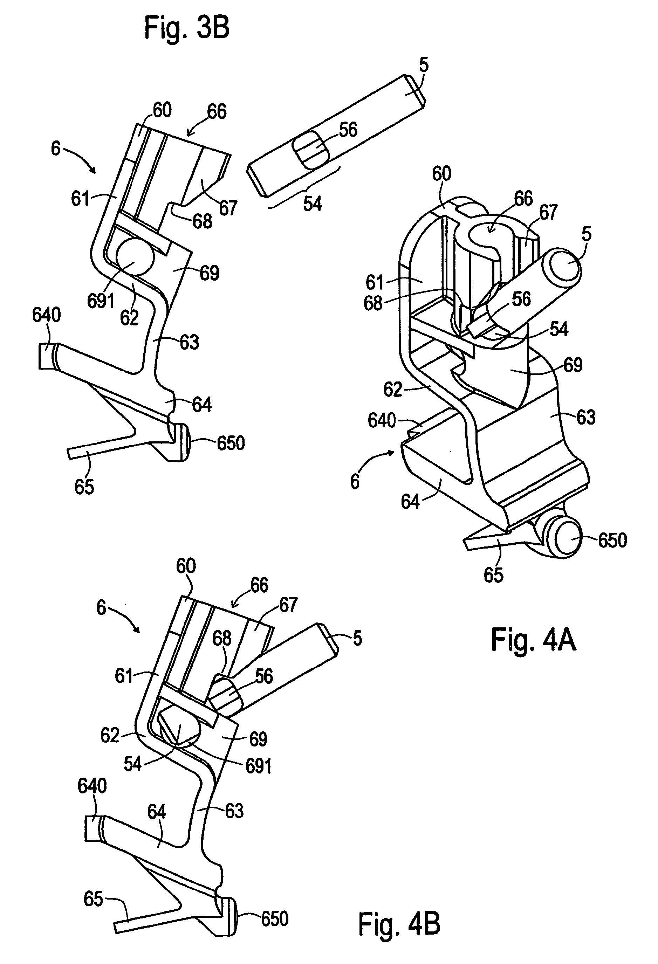

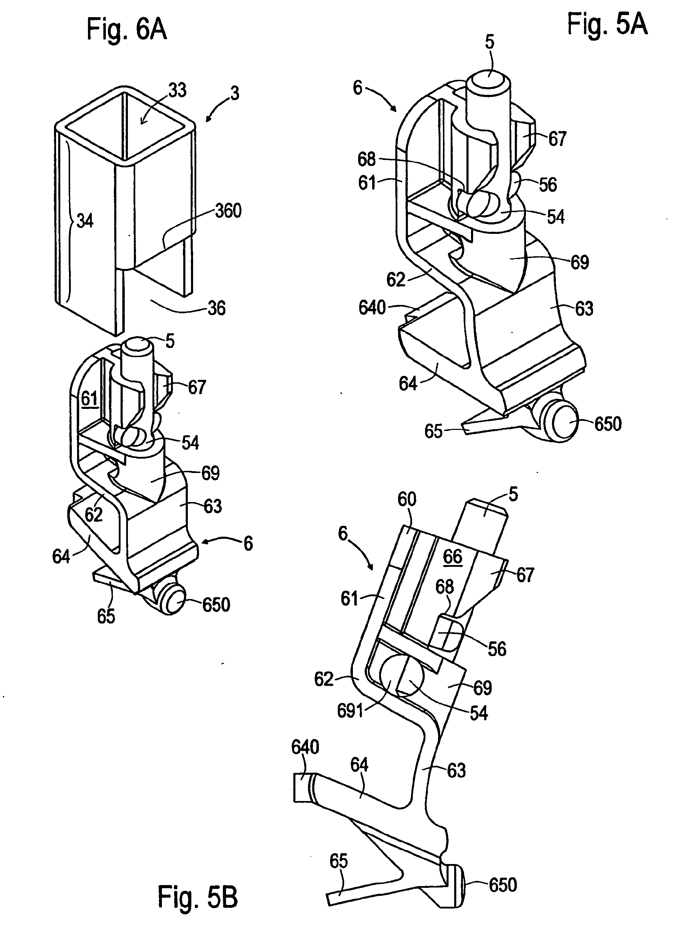

Die Steckaufnahme **66** am Basiskörper **60** ist zum elastisch rastenden Einstecken des unteren Endes **54** der Auslösestange **5** bestimmt. Die Steckaufnahme **66** besteht oben aus einer nach vorn offenen, elastisch spreizbaren Umklammerung **67** und unten aus dem Sockel **69,** in dessen Lager **690** das untere Ende **54** der eingesteckten Auslösestange **5** aufsitzt. Unterhalb der Umklammerung **67** liegt der Hinterschnitt **68.** Am unteren Ende **54** der Auslösestange **5** sind paarweise, ohrenförmig ausgebildete Anformungen als Rückhalteelemente **56** vorhanden. Bei der Montage lässt sich das untere Ende **54** der Auslösestange **5** zunächst schräg in den Sockel **69** einsetzen. Der interne Freiraum **691** im Sockel **69** bietet Platz beim zunächst schrägen Einsetzen der Auslösestange **5** (s. Figuren 3A bis 4B). Nun kann man die Auslösestange **5** in vertikale Ausrichtung bringen, wonach die am unteren Ende **54** der Auslösestange **5** vorgesehenen Rückhalteelemente **56** unterhalb die kantenförmigen Hinterschnitte **68** gelangen (s. Figuren 5A und 5B). Im ursprünglichen, nicht vorgespannten Zustand des Verriegelungsteils **6** ist dieses gekrümmt (s. Figur 5B), während in der Einbausituation das Verriegelungsteil **6** aus der vorherigen Krümmung im Prinzip gestreckt und damit vorgespannt ist, wobei sich der Übergang vom Sitzsteg **62** zum Ansatz **63** und dieser selbst elastisch verformten (s. Figur 5A).

### Figuren 6A bis 7E

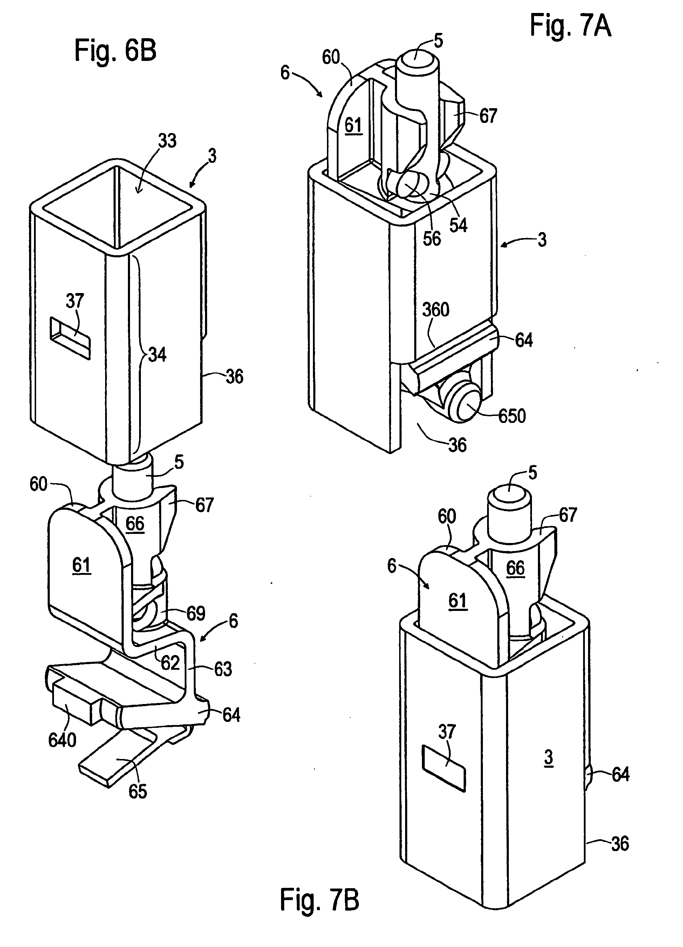

Diese Figurenfolge zeigt die Einbaulage des Verriegelungsteils **6** im unteren Ende **34** des Innenrohrs **3** mit der nach unten offenen, fensterartigen Aussparung **36** in einer ersten Wandung des im Querschnitt rechteckigen Innenrohrs **3.** Nach oben wird die Aussparung **36** von einer Wandungskante **360** begrenzt, oberhalb der sich die erste Wandung befindet. Das zunächst gekrümmte, vorspannungslose Verriegelungsteil **6** (s. Figur 5B) wird in das untere Ende **34** des Innenrohrs **3** eingeführt und streckt sich dabei in gerade Haltung mit Vorspannung (s. Figuren 5A und 6B). Im eingesetzten Zustand unterfasst der vorderste Bereich des Querstegs **64** die Wandungskante **360** und das darunter befindende Stellelement **650** ragt aus der Aussparung **36** heraus. Zugleich rastete der Zapfen **640** des Querstegs **64** in den Durchbruch **37** ein, welcher sich in der dritten Wandung befindet, die der ersten Wandung mit der Aussparung **36** gegenüberliegt. Der plattenförmige Vertikalsteg **61** kommt vor der Innenseite dieser dritten Wandung zu liegen. Jetzt entwickelt das Verriegelungsteil **6** mit seinem zurückgebogenen Basiskörper **60** eine Federwirkung.

### Figuren 8A bis 8E

Hat man das Innenrohr **3** mit dem Verriegelungsteil **6** in das Aussenrohr **2** korrekt eingeschoben, so dass dessen erste Wandung mit der Aussparung **36** und dem dort herausragenden Stellelement **650** auf die erste Wandung des Aussenrohrs **2** mit dem Lochraster **21** trifft, das Stellelement **650** dabei mit einem Loch **22** zur Deckung kommt und die Auslösestange **5** nicht betätigt wird, so rastet das Stellelement **650** in das betreffende Loch **22** ein. Durch das Bestreben des Verriegelungsteils **6,** seine Vorspannung zu vermindern, bleiben das Stellelement **650** im Loch **22** und das Innenrohr **3** in der gewählten Auszugshöhe arretiert. Der Flügel **65** steht mit Abstand zur Innenseite der dritten Wandung des Innenrohrs **3.**

Zwischen dem Aussenrohr **2** und dem Innenrohr **3,** d.h. zwischen deren ersten Wandungen mit dem Raster **21** bzw. der Aussparung **36** ist ein Spalt **S** vorhanden, der sich U-förmig nach den beiden angrenzenden Wandungen erstreckt. Der Quersteg **64** des Basiskörpers **60** des Verriegelungsteils **6** verläuft von der ersten Wandung mit der Aussparung **36** hin zur dritten Wandung mit dem Durchbruch **37** schräg aufsteigend. Bei axialer steigender Belastung des Innenrohrs **3** wird ein zunehmendes Andrücken des Innenrohrs **3** mit dessen dritter Wandung, die den Durchbruch **37** aufweist, an die anliegende dritte Wandung des Aussenrohrs **2** bewirkt, wodurch sich die Haftreibung erhöht.

### Figuren 9A bis 10B

Bei Betätigung der Auslösestange **5,** d.h. mit Niederdrücken des Knopfes **50,** drückt das im Lager **690** sitzende untere Stangenende **54** auf den Sitzsteg **62** und bewegt diesen zusammen mit dem Ansatz **63** und dem Quersteg **64** elastisch schräg abwärts, wodurch das Stellelement **650** aus dem Loch **22** zurückgezogen wird und damit die Arretierung zwischen Aussenrohr **2** und Innenrohr **3** aufgehoben ist. Das Innenrohr **3** kann nun beliebig in eine höhere oder tiefere Position verschoben und dort in einem anderen Loch **22** erneut arretiert werden. Der Flügel **65** schlägt jetzt an der Innenseite der dritten Wandung des Innenrohrs **3** an und wirkt als Begrenzung der Auslenkung des Verriegelungsteils **6.**

Auch lässt sich das Innenrohr **3** bei niedergedrücktem Knopf **50 -** der jedenfalls bis zur Überwindung des Rasters **21** gedrückt gehalten werden muss - gänzlich aus dem Aussenrohr **2** herausziehen. Sieht man am Stellelement **650** und/oder an den Oberkanten der Löcher **22** Abrundungen oder Schrägen vor, so lässt sich das Innenrohr **3** auch ohne Betätigung des Knopfes **50** aus dem Aussenrohr **2** herausziehen, da das Anstossen des Stellelements **650** an den oberen Rändern der Löcher **22** ein Zurückbiegen des Stellelements **650** bewirkt, bis dieses mit dem jeweiligen Loch **22** völlig ausser Eingriff kommt. Ein Absenken des in einer gewählten Auszugshöhe arretierten Innenrohrs **3**- das Stellelement **650** sitzt in einem Loch **22 -** ohne Niederdrücken des Knopfes **50** im Bereich des Rasters **21** ist dagegen ausgeschlossen.

### Figuren 11A bis 17B

Das in dieser Figurenfolge dargestellte Verriegelungsteil **6** *zweiter Variante* ist ebenfalls für Aussen- und Innenrohre **2,3** mit rechteckigem Querschnitt vorgesehen. Hier werden nur die Modifikationen gegenüber dem Verriegelungsteil **6** *erster Variante* besprochen, ansonsten wird auf die Erläuterung der korrespondierenden Figuren zur *ersten Variante* des Verriegelungsteils **6** und die unter dem Kapitel "Kurzbeschreibung der beigefügten Zeichnungen" gegebene Betitelung der jeweiligen Figur verwiesen.

Beim Verriegelungsteil **6** *zweiter Variante* hat man auf den von der Unterseite des Querstegs **64** abgehenden Flügel **65** verzichtet. Auf der Frontseite des Sockels **69,** welche im eingebauten Zustand auf die erste Wandung des Innenrohrs **3** mit der Aussparung **36** gerichtet ist, befindet sich eine Nase **692,** die eine verbesserte Abstützung mit verminderter Reibung an der Innenseite der ersten Wandung des Innenrohrs **3** bei Betätigung Verriegelungsteils **6** bewirkt. Das Stellelement **650** wurde mit einem Einsatz **651,** der vorzugsweise aus Stahl ist, versehen. Dieser Einsatz **651** ragt frontseitig, in Richtung des Lochrasters **21** im Aussenrohr **2** aus dem Stellelement **650** heraus, wobei der nasenartig vorstehende Anteil des Einsatzes **651** zum Eingriff in die Löcher **22** des Rasters **21** bestimmt ist. Für das Verriegelungsteil **6** kommen weiterhin die funktionalen und fertigungstechnischen Vorteile des im Prinzip erneut einteiligen Kunststoffspritzteils zur Geltung, während für die quasi punktuelle Lastaufnahme bei der Abstützung des Stellelements **650** im gewählten Loch **22** ein eingebetteter metallischer Einsatz **651** höherer Festigkeit verwendet wird.

### Figuren 18A und 18B

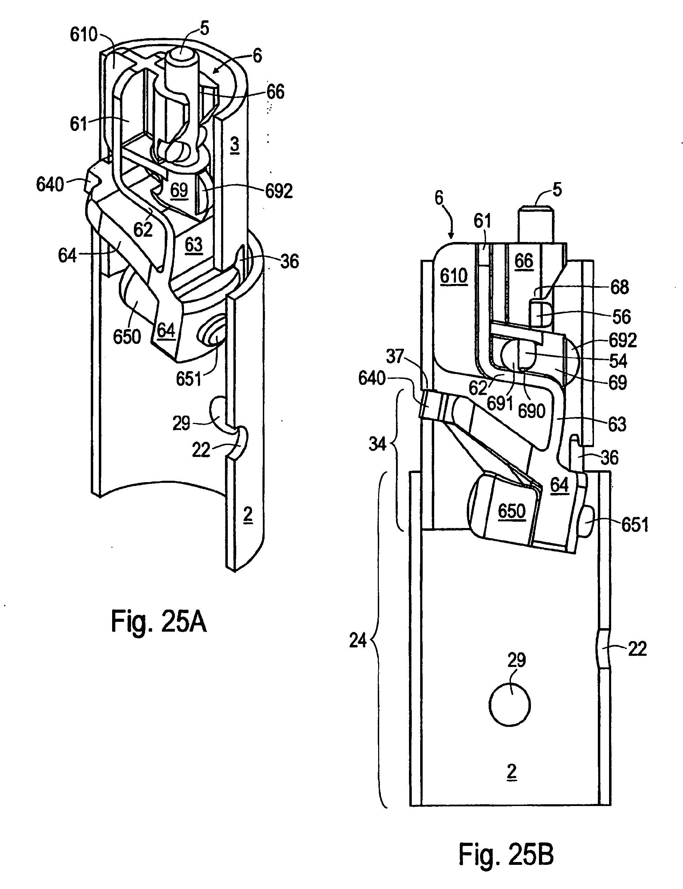

In diesem Figurenpaar und anschliessend bis zur Figur 25B wird der höhenverstellbare Ständer in einer alternativen Ausführungsform mit Aussen- und Innenrohren **2,3** von rundem Querschnitt und dem zugehörigen Verriegelungsteil **6** *dritter Variante* dargestellt.

Das Aussenrohr **2** besitzt wiederum einen inneren Kanal **23,** der sich zum oberen Ende **25** und zum unteren Ende **24** des Aussenrohrs **2** erstreckt. Im Aussenrohr **2** lässt sich ein teleskopisch verschiebbares Innenrohr **3** einschieben, das gemäss seiner Auszugsstellung mit entsprechender Länge aus der oberen Mündung **20** des Aussenrohrs **2** herausragt. Das Innenrohr **3** hat den inneren Kanal **33,** der zwischen oberem Ende **35** und unterem Ende **34** des Innenrohrs **3** verläuft. An seinem oberen Ende **35** setzt an das Innenrohr **3** ein Lastarm **4** an, hier z.B. in abgestufter Gestalt.. Im Innenrohr **3** erstreckt sich axial die Auslösestange **5,** deren Betätigungselement **50** am oberen Ende **35** des Innenrohrs **3** herausragt. Die Auslösestange **5** kann auf das Verriegelungsteil **6** zur Lösung der Arretierung zwischen Innen- und Aussenrohr **2,3** einwirken. Im Aussenrohr **2** ist ein vertikal verlaufendes Raster **21** mit systematisch übereinander liegenden Löchern **22** vor handen. Das Verriegelungsteil **6** sitzt wiederum im unteren Ende **34** des Innenrohrs **3,** wobei ein Stellelement **650** des Veniegelungsteils **6** aus der im unteren Ende **34** vorhanden fensterartigen Aussparung **36,** die nach unten offen ist, herausragt und vom Innenrohr **3** her zum Eingriff in das Raster **21** im Aussenrohr **2** bestimmt ist. Das im Innenrohr **3** eingesetzte Verriegelungsteil **6** *dritter Variante* steht, wie bei den vorherigen Varianten, unter elastischer Vorspannung, welche die federnde Lagerung der Auslösestange **5** ergibt und zugleich auf das Stellelement **650** wirkt.

Am unteren Ende **24** des Aussenrohrs **2** ist ein Anschlag **29** zur Begrenzung der maximalen Einschubtiefe des Innenrohrs **3** vorhanden, wobei der Anschlag **29** z.B. durch einen Querstift oder nach innen gerichtete Eindrücke gebildet wird. An das untere Ende **24** des Aussenrohrs **2** ist ein sich nach unten verjüngender Konusabschnitt **26** angesetzt, der zum Einstecken in eine komplementäre Aufnahme einer Tragstruktur 1, z.B. eine Podestplatte **1,** bestimmt ist. Am Konusabschnitt **26** sind Rotationssicherungskonturen **27,** z.B. in Gestalt von nach unten offenen Langlöchern vorgesehen. Komplementär zu den Rotationssicherungskonturen **27** sind in der konischen Steckaufnahme Gegenkonturen vorhanden, so dass der eingesteckte Ständer sich auch bei seitlicher Krafteinwirkung nicht verdreht. Eine solche Anordnung ist Gegenstand des EP 0 883 363 B1. Das Eingriffsloch **28** am Übergang zwischen dem unteren Ende **24** und dem Konusabschnitt **26** dient zum Ansetzen eines Werkzeugs, um den in einer konischen Steckaufnahme fest sitzenden Ständer auszuhebeln.

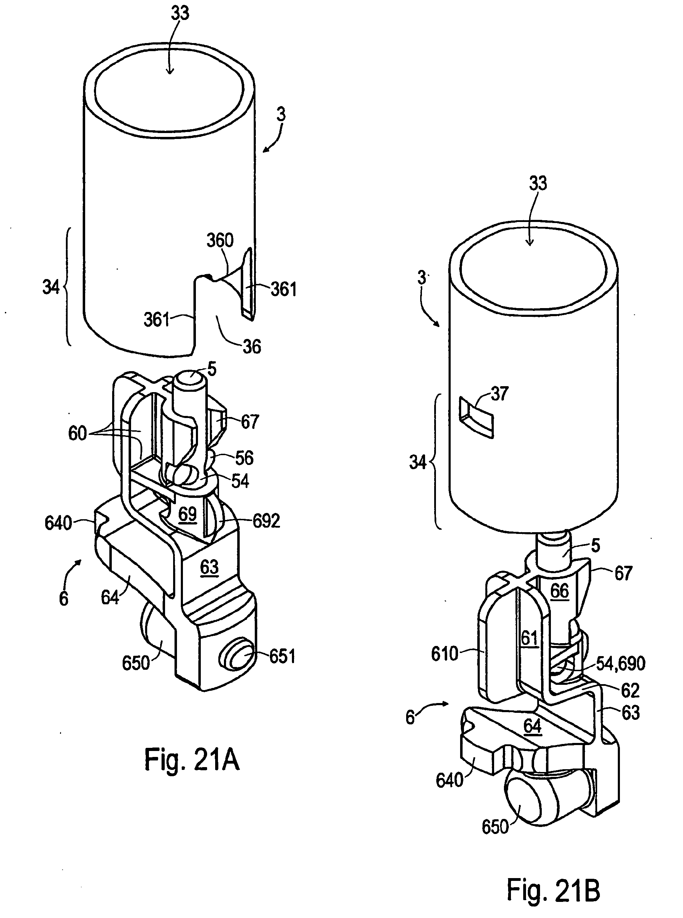

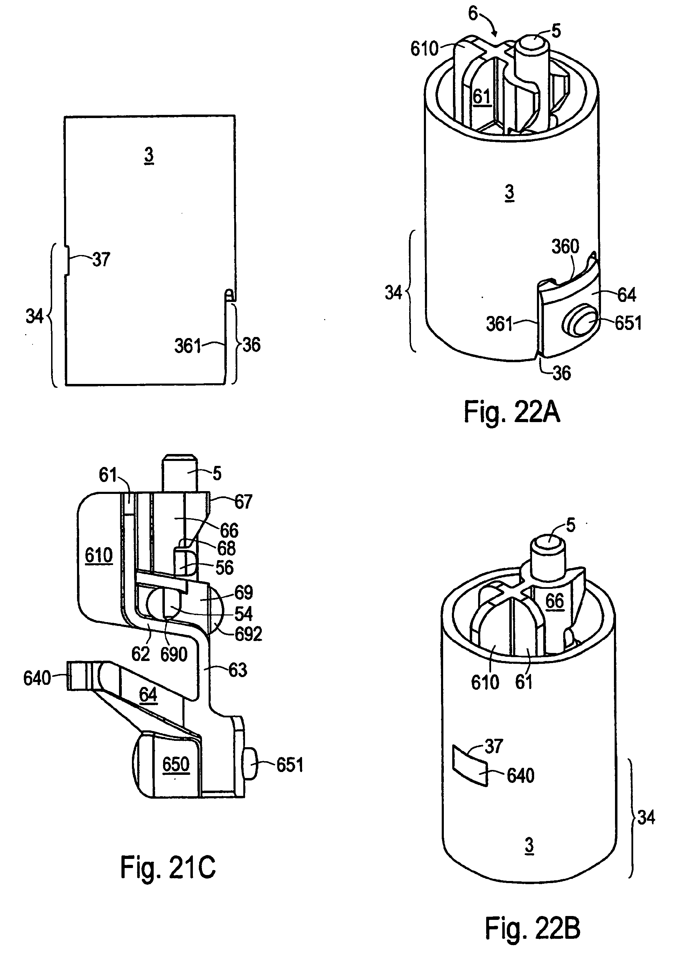

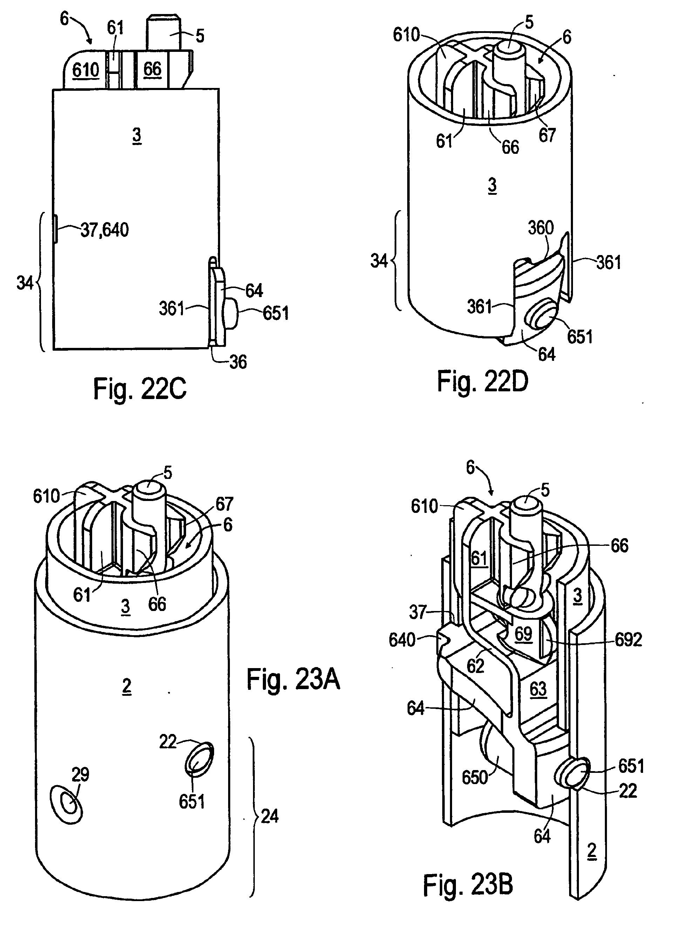

Bei der Ausführungsform mit Aussen- und Innenrohren **2,3** von rundem Querschnitt sind naturgemäss keine rechtwinklig zueinander stehenden und parallel gegenüber liegenden Wandungen vorhanden, sondern jeweils eine einzige, zylindrisch umlaufende Wandung. Folglich erstreckt sich die fensterartige Aussparung **36** am unteren Ende **34** des Innenrohrs **3** nicht über eine Wandung, sondern nur über einen bogenförmigen Abschnitt. Die Aussparung **36** wird nach oben von der oberen Wandungskante **360** und zu den Seiten von den beiden seitlichen Wandungskanten **361** begrenzt (s. beispielsweise Figuren 21A, 21C, 22A).

### Figuren 19A bis 25B

Hier werden nur die Modifikationen gegenüber den Verriegelungsteilen **6** *erster* und *zweiter Variante* behandelt, ansonsten wird auf die Darstellung der korrespondierenden Figuren zu den beiden vorherigen *Varianten* des Verriegelungsteils **6** und die im Kapitel "Kurzbeschreibung der beigefügten Zeichnungen" zu den jeweiligen Figuren angegebenen Betitelungen verwiesen.

Auch das Verriegelungsteil **6** *dritter Variante* besitzt keinen von der Unterseite des Querstegs **64** abgehenden Flügel **65,** jedoch zur Abstützung im Innenrohr **3** den T-förmig vom Vertikalsteg **61** abgehenden Mittelsteg **610** sowie die auf der Frontseite des Sockels **69** vorgesehene Nase **692,** welche im eingebauten Zustand in Richtung der Aussparung **36** zeigt. Wie in der zweiten Variante, ist das Stellelement **650** mit einem festen, metallischen Einsatz **651** bestückt, der frontseitig, in Richtung des Lochrasters **21** im Aussenrohr **2** aus dem Stellelement **650** herausragt, wobei der vorstehende Anteil des Einsatzes **651** im arretierten Zustand in einem ausgewählten Loch **22** des Rasters **21** im Aussenrohr **2** zu liegen kommt.

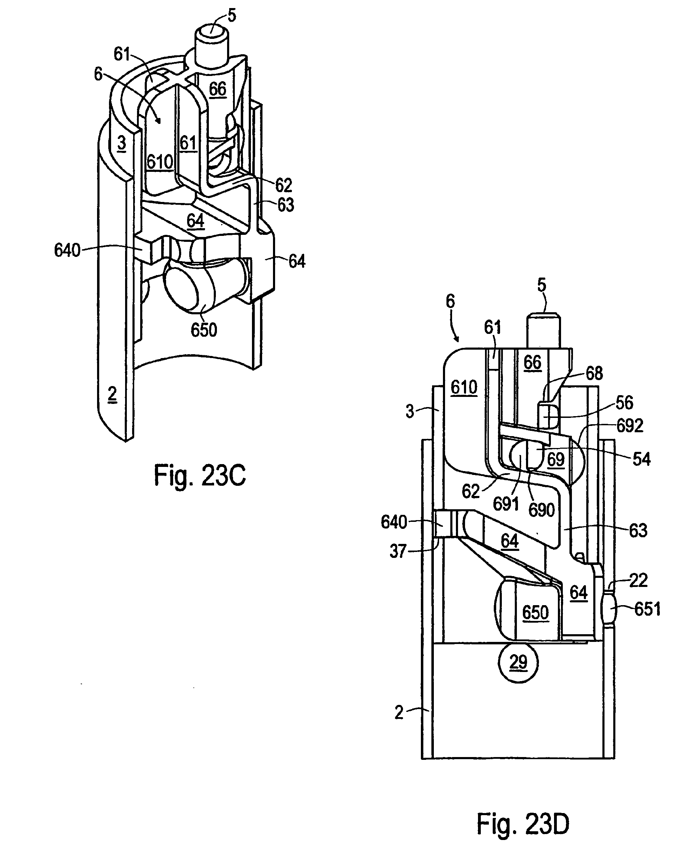

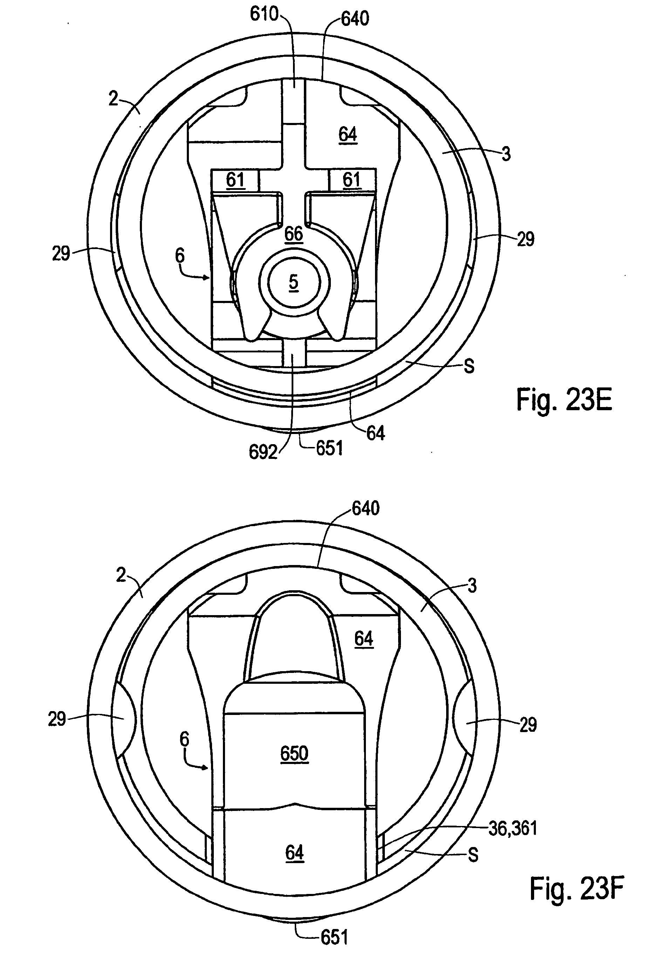

Beim Verriegelungsteil **6** *dritter Variante* vereinigen sich frontseitig das Stellelement **650** und der Quersteg **64** durch einen vom Quersteg **64** nach unten abbiegenden, auf das Stellelement **650** übergehenden blockförmigen Abschnitt, aus dem der Einsatz **651** herausragt. In arretierter Stellung des Verriegelungsteils **6** kommt der blockförmige Abschnitt von vereinigtem Quersteg **64** und Stellelement **650** in der Aussparung **36** des Innenrohrs **3** zu liegen und wird dabei dreiseitig von der oberen und den beiden seitlichen Wandungskanten **360;361,361** umschlossen. Ist das Innenrohr **3** in arretierter Stellung in das Aussenrohr **2** eingesteckt und erfährt eine seitliche Krafteinwirkung - z. B. durch Anstossen an den Lastarm **4 -,** so nimmt nicht allein der in einem Loch **22** sitzende Einsatz **651** das Drehmoment auf, sondern auch der gegen eine der seitlichen Wandungskanten **361,361** gedrückte blockförmige Abschnitt (s. insbesondere Figuren 22A, 23F).

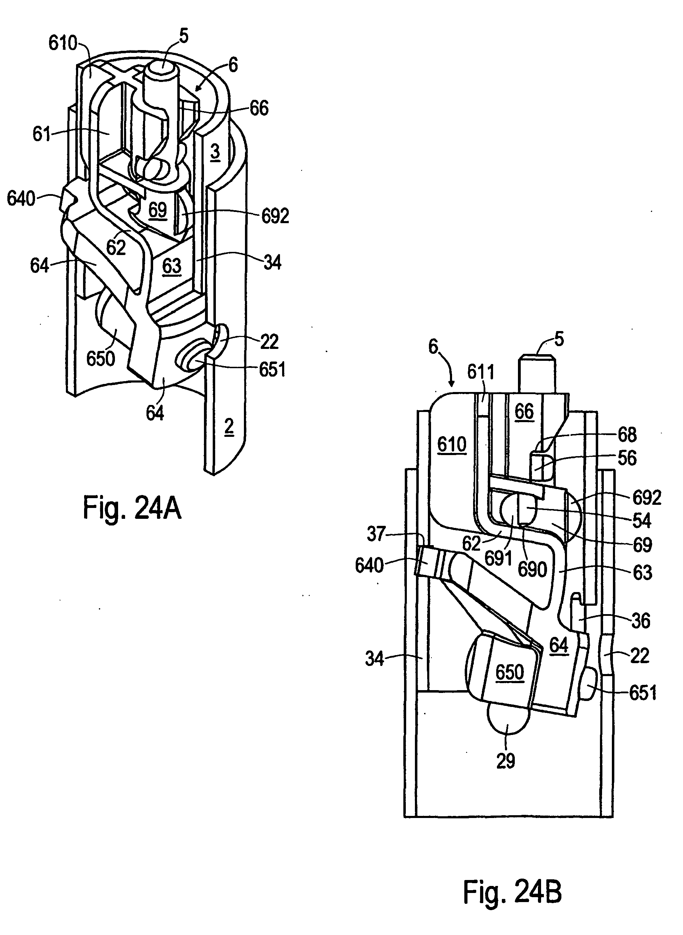

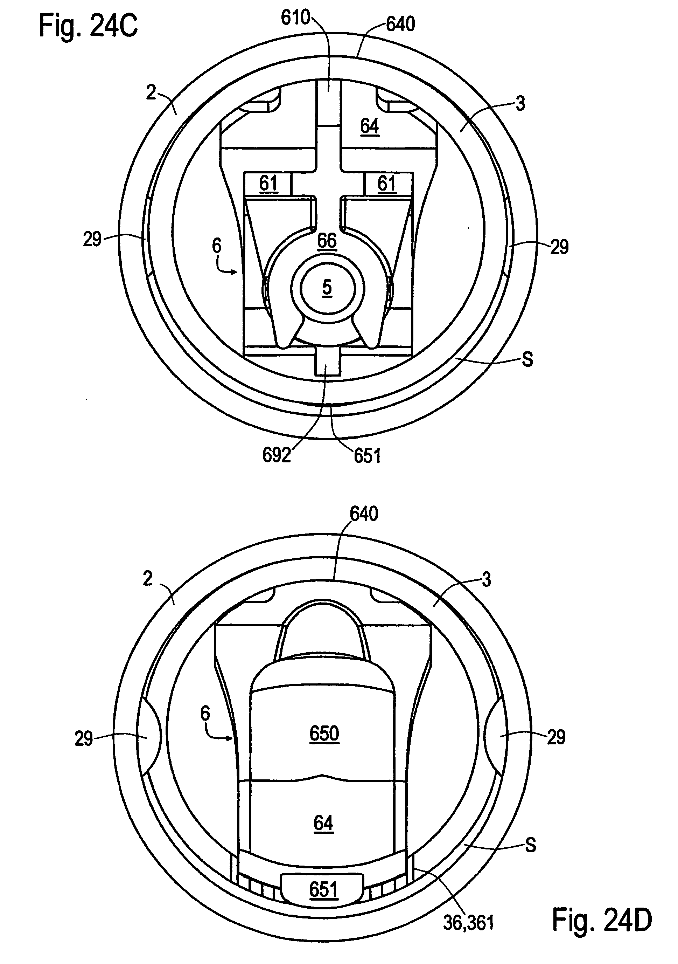

Bei Betätigung der Auslösestange **5,** d.h. mit Niederdrücken des Knopfes **50,** wird über die elastische Verformung des Verriegetungsteils **6** der blockförmige Abschnitt mit dem Stellelement **650** und dem Einsatz **651** in Richtung des Hohlraumes des Innenrohrs 3 zurückgezogen, so dass ein zuvor belegtes Loch **22** von der Spitze des Einsatzes freikommt und damit die Arretierung zwischen Aussen- und Innenrohr **2,3** momentan aufgehoben ist (s. insbesondere Figuren 22D, 24A bis 25B).

## Patentansprüche

1. Höhenverstellbarer Ständer zum Anhängen von Artikeln oder zur Halterung einer Ablage zur liegenden Aufbewahrung von Artikeln, mit:
a) einem an einer Tragstruktur **(1)** fixierten, vorzugsweise senkrecht stehenden Aussenrohr **(2),** das einen inneren Kanal **(23)** besitzt, der sich zum oberen Ende **(25)** und zum unteren Ende **(24)** des Aussenrohrs **(2)** erstreckt;
b) einem Innenrohr **(3),** das:
ba) im Aussenrohr **(2)** teleskopisch verschiebbar angeordnet ist;
bb) einen inneren Kanal **(33)** besitzt, der sich zum oberen Ende **(35)** und zum unteren Ende **(34)** des Innenrohrs **(3)** erstreckt; und
bc) an seinem oberen Ende **(35)** einen Lastarm **(4)** aufweist; und
c) einer Auslösestange **(5),** die:
ca) axial im Innenrohr **(3)** angeordnet ist;
cb) in einem Betätigungselement (50) endet, welches am oberen Ende **(35)** des Innenrohrs **(3)** von aussen zugänglich ist; und
cc) auf ein Verriegelungsteil **(6)** zur Arretierung zwischen Innenrohr **(3)** und Aussenrohr **(2)** wirkt;
d) einem im Aussenrohr **(2)** vertikal verlaufenden Raster **(21)** mit systematisch übereinander liegenden Löchern **(22)** ; und
e) einem am das Verriegelungsteil **(6)** vorhandenen Stellelement **(650)** das vom Innenrohr **(3)** her zum Eingriff in das Raster **(21)** bestimmt ist, **dadurch gekennzeichnet, dass**
f) das Verriegelungsteil **(6)** unter elastischer Vorspannung innerlich des Innenrohrs **(3)** angeordnet ist; und
g) diese Vorspannung die federnde Lagerung der Auslösestange **(5)** bewirkt und zugleich auf das Stellelement **(650)** wirkt.

2. Höhenverstellbarer Ständer nach Anspruch 1 **dadurch gekennzeichnet, dass**
a) das Betätigungselement **(50)** axial oder seitlich in einer Öffnung aus dem oberen Ende **(35)** des Innenrohrs **(3)** herausragt; und
b) das Verriegelungsteil **(6)** im unteren Ende **(34)** des Innenrohrs **(3)** angeordnet ist.

3. Höhenverstellbarer Ständer nach einem der Ansprüche 1 oder 2, **dadurch gekennzeichnet, dass** das Verriegelungsteil **(6)**
a) sich einerseits mit einem Zapfen **(640)** in einer Aussparung **(37)** im unteren Ende **(34)** des Innenrohrs **(3)** abstützt;
b) andererseits mit einem Steg **(64)** die Wandungskante **(360)** eines Durchbruchs **(36)** am unteren Ende **(34)** des Innenrohrs **(3)** unterfasst; und
c) unterhalb des Steges **(64)** das überstehende Stellelement **(650)** hervorragt, wobei
d) der Durchbruch **(36)** vorzugsweise nach unten hin offen ist und die Wandungskante **(360)** zumindest im Prinzip horizontal verläuft.

4. Höhenverstellbarer Ständer nach einem der Ansprüche 1 bis 3, **dadurch gekennzeichnet, dass**
a) die Federwirkung des Verriegelungsteils **(6)** von seinem Basiskörper **(60)** hervorgerufen wird;
b) die Vorspannung des Basiskörpers **(60)** im Innenrohr **(3)** durch elastische Verformung entgegen der eigenen Krümmung des Basiskörpers **(60)** generiert wird; und
c) auf dem Basiskörper **(60)** eine Steckaufnahme **(66)** zum Einstecken des unteren Endes **(54)** der Auslösestange **(5)** vorhanden ist.

5. Höhenverstellbarer Ständer nach Anspruch 4, **dadurch gekennzeichnet, dass** die Steckaufnahme **(66)** das untere Ende **(54)** der Auslösestange **(5)** elastisch rastend aufnimmt.

6. Höhenverstellbarer Ständer nach Anspruch 4 oder 5, **dadurch gekennzeichnet, dass**
a) die Steckaufnahme **(66)** oben aus einer nach vorn offenen, elastisch spreizbaren Umklammerung **(67)** und unten einem Sockel **(69),** in dem das untere Ende **(54)** der Auslösestange **(5)** aufsitzt, besteht;
b) unterhalb der Umklammerung **(67)** ein Hinterschnitt **(68)** vorhanden ist, der von am unteren Ende **(54)** der Auslösestange **(5)** vorgesehenen Rückhalteelementen **(56)** unterfasst wird; und
c) bei der Montage das untere Ende **(54)** der Auslösestange **(5)** sich zunächst schräg in den Sockel **(69)** einsetzen und sich dann die Auslösestange **(5)** in vertikale Ausrichtung bringen lässt.

7. Höhenverstellbarer Ständer nach Anspruch 6, **dadurch gekennzeichnet, dass**
a) die Rückhalteelemente **(56)** am unteren Ende **(54)** der Auslösestange **(5)** paarweise, ohrenförmig ausgebildete Anformungen sind;
b) im Sockel **(69)** ein muldenförmiges Lager **(690)** den Stecksitz für das untere Ende **(54)** der Auslösestange **(5)** bildet; und
c) intern im Sockel **(69)** ein Freiraum **(691)** vorhanden ist, der Raum beim zunächst schrägen Einsetzen der Auslösestange **(5)** bietet.

8. Höhenverstellbarer Ständer nach einem der Ansprüche 1 bis 7 **dadurch gekennzeichnet dass** das aus der Steckaufnahme **(66)** und dem Basiskörper **(60)** bestehende Verriegelungsteil **(6)** aufweist:
a) am Basiskörper **(60)** einen Vertikalsteg **(61)** als Rückenstütze der Umklammerung **(67),** einen Sitzsteg **(62)** als Untergrund für den Sockel **(69)** der Steckaufnahme **(66),** einen abwärts weisenden Ansatz **(63),** der in den Quersteg **(64)** übergeht, und ein sich nach vorn erstreckendes Stellelement **(650);** und
b) die Federwirkung des Verriegelungsteils **(6)** im wesentlichen vorn Ansatz **(63)** und dessen Übergang zum Sitzsteg **(62)** geliefert wird; wobei
c) optional unterhalb des Querstegs **(64)** ein sich nach rückwärts erstreckender Flügel **(65)** vorhanden sein kann, der in gelöster Stellung des Verriegelungsteils **(6)** als Anschlag an der Innenwand des Innenrohrs **(3)** ansteht.

9. Höhenverstellbarer Ständer nach einem der Ansprüche 1 bis **8**, **dadurch gekennzeichnet, dass**
a) das Verriegelungsteil **(6)** ein einteiliges Kunststoffspritzteil ist; und
b) das Stellelement **(650)** vorzugsweise einen metallischen Einsatz **(651)** besitzt, der in arretierter Stellung des Verriegelungsteils **(6)** im gewählten Loch **(22)** im Aussenrohr zu liegen kommt.

10. Höhenverstellbarer Ständer nach einem der Ansprüche 1 bis 9, **dadurch gekennzeichnet, dass** das Innenrohr **(3)** und das Aussenrohr **(2)**
a) einen rechteckigen, vorzugsweise quadratischen Querschnitt aufweisen; oder
b) einen rundlichen, vorzugsweise einen kreisrunden Querschnitt haben; und
c) am unteren Ende **(24)** des Aussenrohrs **(2)** ein Anschlag **(29)** zur Begrenzung der maximalen Einschubtiefe des Innenrohrs **(3)** vorhanden ist, wobei der Anschlag **(29)** z.B. durch einen Querstift oder nach innen gerichtete Eindrücke gebildet wird.

11. Höhenverstellbarer Ständer nach einem der Ansprüche 1 bis 10, **dadurch gekennzeichnet, dass** bei einem runden Querschnitt des Innenrohrs **(3)** und Aussenrohrs **(2)**
a) am unteren Ende **(24)** des Aussenrohrs **(2)** ein sich nach unten verjüngender Konusabschnitt **(26)** angesetzt sein kann, der zum Einstecken in eine komplementäre Aufnahme einer Tragstruktur. z.B. eine Podestplatte, bestimmt ist;
b) der Konusabschnitt **(26)** Rotationssicherungskonturen **(27),** z.B. in Gestalt von nach unten offenen Langlöchern aufweisen kann; und
b) in arretierter Stellung des Verriegelungsteils **(6)** die Frontpartie des Querstegs **(64)** in der Aussparung **(36)** des Innenrohrs **(3)** zu liegen kommt und dabei zwischen seitlichen Wandungskanten **(361)** aufgenommen wird.

12. Höhenverstellbarer Ständer nach einem der Ansprüche 1 bis 11,
**dadurch gekennzeichnet, dass**
a) zwischen dem Aussenrohr **(2)** und dem Innenrohr **(3),** nämlich zwischen den Wandflächen mit dem Raster **(21)** bzw. der Aussparung **(36)** ein Spalt **(S)** vorhanden ist, der sich U-förmig nach hinten erstreckt;
b) der Quersteg **(64)** des Basiskörpers **(60)** des Verriegelungsteils **(6)** von der Wandfläche mit der Aussparung **(36)** hin zur Wandfläche mit dem Durchbruch **(37)** schräg aufsteigend verläuft; und
c) bei axialer steigender Belastung des Innenrohrs **(3)** ein zunehmendes Andrücken des Innenrohrs **(3)** mit dessen Wandfläche, die den Durchbruch **(37)** aufweist, an die anliegende Wandfläche des Aussenrohrs **(2)** bewirkt wird, wodurch sich die Haftreibung erhöht.

## Claims

1. Height-adjustable stand for hanging articles or for holding a rack for storing articles horizontally, with:
a) an outer tube **(2)** which is fixed to a supporting structure **(1),** is preferably vertical and has an inner channel **(23)** which extends to the upper end **(25)** and to the lower end **(24)** of the outer tube **(2);**
b) an inner tube **(3)** which:
ba) is arranged in a telescopically displaceable manner in the outer tube **(2),**
bb) has an inner channel **(33),** which extends to the upper end **(35)** and to the lower end **(34)** of the inner tube **(3),** and
bc) at its upper end **(35)** has a load-bearing arm **(4);** and
c) a release rod **(5)** which:
ca) is arranged axially in the inner tube **(3),**
cb) ends in an actuating element **(50),** which is accessible from the outside at the upper end **(35)** of the inner tube **(3),** and
cc) acts on a locking part **(6)** for providing a lock between inner tube **(3)** and outer tube **(2);**
d) a grid **(21)** which runs vertically in the outer tube **(2)** and has holes **(22)** situated systematically one above another; and
e) an adjusting element **(650)** which is present on the locking part **(6)** and is intended for engagement in the grid **(21)** from the inner tube **(3), characterized in that**
f) the locking part **(6)** is arranged under elastic prestress within the inner tube **(3);** and
g) this prestress brings about the resilient mounting of the release rod **(5)** and at the same time acts on the adjusting element **(650).**

2. Height-adjustable stand according to Claim 1, **characterized in that**
a) the actuating element **(50)** protrudes out of the upper end **(35)** of the inner tube **(3)** axially or laterally in an opening; and
b) the locking part **(6)** is arranged in the lower end **(34)** of the inner tube **(3).**

3. Height-adjustable stand according to one of Claims 1 or 2, **characterized in that** the locking part **(6)**
a) is supported at one end by means of a peg **(640)** in a cutout **(37)** in the lower end **(34)** of the inner tube **(3);**
b) at the other end grasps by means of a web **(64)** under the wall edge **(360)** of an aperture **(36)** at the lower end **(34)** of the inner tube **(3);** and
c) the protruding adjustment element **(650)** projects below the web **(64);** and
d) the aperture **(36)** preferably being open downwards and the wall edge **(360)** running horizontally at least in principle.

4. Height-adjustable stand according to one of Claims 1 to 3,
**characterized in that**
a) the spring action of the locking part **(6)** is brought about by its base body **(60);**
b) the prestress of the base body **(60)** in the inner tube **(3)** is generated by elastic deformation counter to the inherent curvature of the base body **(60);** and
c) there is a plug-in socket **(66)** for the insertion of the lower end **(54)** of the release rod **(5)** on the base body **(60).**

5. Height-adjustable stand according to Claim 4, **characterized in that** the plug-in socket **(66)** receives the lower end **(54)** of the release rod **(5)** in an elastically latching manner.

6. Height-adjustable stand according to Claim 4 or 5, **characterized in that**
a) the plug-in socket **(66)** comprises, at the top, a forwardly open, elastically expandable clasp **(67)** and, at the bottom, a base **(69)** in which the lower end **(54)** of the release rod **(5)** sits;
b) there is an undercut **(68)** below the clasp **(67)** which is grasped from below by retaining elements **(56)** provided at the lower end **(54)** of the release rod **(5);** and
c) during installation, the lower end **(54)** of the release rod **(5)** can firstly be inserted obliquely into the base **(69)** and then the release rod **(5)** can be brought into a vertical orientation.

7. Height-adjustable stand according to Claim 6, **characterized in that**
a) the retaining elements **(56)** at the lower end **(54)** of the release rod **(5)** are pairs of formations of ear-shaped design;
b) in the base **(69),** a trough-shaped bearing **(690)** forms the plug-in seat for the lower end **(54)** of the release rod **(5);** and
c) internally in the base **(69)** there is a clearance **(691)** which provides space for the initially oblique insertion of the release rod **(5).**

8. Height-adjustable stand according to one of Claims 1 to 7, **characterized in that** the locking part **(6)** comprising the plug-in socket **(66)** and the base body **(60)** has:
a) on the base body **(60),** a vertical web **(61)** as rear support of the clasp **(67),** a seat web **(62)** as the underlying surface for the base **(69)** of the plug-in socket **(66),** a downwardly pointing extension **(63)** which merges into the transverse web **(64),** and a forwardly extending adjusting element **(650);** and
b) the spring action of the locking part **(6)** is supplied essentially by the extension **(63)** and its transition to the seat web **(62);** with
c) a rearwardly extending wing **(65)** optionally being present below the transverse web **(64)** which, in the released position of the locking part **(6),** is present as a stop on the inner wall of the inner tube **(3).**

9. Height-adjustable stand according to one of Claims 1 to 8,
**characterized in that**
a) the locking part **(6)** is a single-piece moulded plastic part; and
b) the adjusting element **(650)** preferably has a metallic insert **(651)** which, in the locked position of the locking part **(6),** comes to lie in the selected hole **(22)** in the outer tube.

10. Height-adjustable stand according to one of Claims 1 to 9, **characterized in that** the inner tube **(3)** and the outer tube **(2)**
a) have a rectangular, preferably square cross section; or
b) have a round, preferably a circular cross section; and
c) at the lower end **(24)** of the outer tube **(2)** there is a stop **(29)** for limiting the maximum inserting depth of the inner tube **(3),** the stop **(29)** being formed, for example, by a transverse pin or inwardly directed impressions.

11. Height-adjustable stand according to one of Claims 1 to 10, **characterized in that**, in the case of a round cross section of the inner tube **(3)** and outer tube **(2),**
a) a downwardly tapering cone section **(26)** can be fitted to the lower end **(24)** of the outer tube **(2)** and is intended for insertion into a complementary socket of a supporting structure, for example a pedestal plate;
b) the cone section **(26)** can have anti-rotation contours **(27),** for example in the form of downwardly open elongated holes; and
c) in the locked position of the locking part **(6),** the front portion of the transverse web **(64)** comes to lie in the cutout **(36)** of the inner tube **(3)** and, in the process, is received between lateral wall edges **(361).**

12. Height-adjustable stand according to one of Claims 1 to 11,
**characterized in that**
a) there is a gap **(S)** which extends rearwards in a U-shaped manner between the outer tube **(2)** and the inner tube **(3),** namely between the wall surfaces with the grid **(21)** and the cutout **(36);**
b) the transverse web **(64)** of the base body **(60)** of the locking part **(6)** runs from the wall surface with the cutout **(36)** in an obliquely rising manner towards the wall surface with the aperture **(37);** and
c) with increasing loading of the inner tube **(3)** axially, an increasing pressing of the inner tube **(3)** by means of its wall surface which has the aperture **(37)** against the adjacent wall surface of the outer tube **(2)** is brought about, thereby increasing the static friction.

## Revendications

1. Support de hauteur variable pour accrocher des articles ou pour fixer une tablette pour conserver à plat des articles, comprenant:
a) un tube extérieur **(2)** fixé sur une structure portante **(1),** de préférence vertical, qui possède un canal intérieur **(23)** qui s'étend jusqu'à l'extrémité supérieure **(25)** et jusqu'à l'extrémité inférieure **(24)** du tube extérieur **(2);**
b) un tube intérieur **(3):**
ba) qui est disposé de manière déplaçable télescopiquement dans le tube extérieur **(2);**
bb) qui présente un canal intérieur **(33)** qui s'étend jusqu'à l'extrémité supérieure **(35)** et jusqu'à l'extrémité inférieure **(34)** du tube intérieur **(3);** et
bc) qui présente à son extrémité supérieure **(35)** un bras de charge **(4);** et
c) une tige de déclenchement **(5):**
ca) qui est disposée axialement dans le tube intérieur **(3);**
cb) qui se termine par un élément d'actionnement **(50)** qui est accessible depuis l'extérieur à l'extrémité supérieure **(35)** du tube intérieur **(3);** et
cc) qui agit sur une pièce de verrouillage **(6)** pour produire un blocage entre le tube intérieur **(3)** et le tube extérieur **(2);**
d) une matrice **(21)** s'étendant verticalement dans le tube extérieur **(2)** avec des trous **(22)** disposés systématiquement les uns au-dessus des autres; et
e) un élément de réglage **(650)** prévu sur la pièce de verrouillage **(6)** qui est prévu pour s'engager dans la matrice **(21)** depuis le tube intérieur **(3),**
**caractérisé en ce que**
f) la pièce de verrouillage **(6)** est disposée avec précontrainte élastique à l'intérieur du tube intérieur **(3);** et
g) cette précontrainte provoque le support élastique de la tige de déclenchement **(5)** et agit en même temps sur l'élément de réglage **(650).**

2. Support de hauteur variable selon la revendication 1, **caractérisé en ce que**
a) l'élément d'actionnement **(50)** sort axialement ou latéralement dans une ouverture hors de l'extrémité supérieure **(35)** du tube intérieur **(3);** et
b) la pièce de verrouillage **(6)** est disposée dans l'extrémité inférieure **(34)** du tube intérieur **(3).**

3. Support de hauteur variable selon l'une quelconque des revendications 1 ou 2, **caractérisé en ce que** la pièce de verrouillage **(6)**
a) s'appuie d'une part avec un ergot **(640)** dans un perçage **(37)** dans l'extrémité inférieure **(34)** du tube intérieur **(3);**
b) saisit par le dessous d'autre part, avec une patte **(64),** l'arête de paroi **(360)** d'un passage **(36)** à l'extrémité inférieure **(34)** du tube intérieur **(3);** et
c) en dessous de la patte **(64),** l'élément de réglage saillant **(650)** fait saillie; et
d) le passage **(36)** étant de préférence ouvert vers le bas et l'arête de paroi **(360)** s'étendant au moins en principe horizontalement.

4. Support de hauteur variable selon l'une quelconque des revendications 1 à 3, **caractérisé en ce que**
a) l'effet de ressort de la pièce de verrouillage **(6)** est provoqué par son corps de base **(60);**
b) la précontrainte du corps de base **(60)** dans le tube intérieur **(3)** est produite par déformation élastique à l'encontre de la courbure propre du corps de base **(60);** et
c) un logement d'enfichage **(66)** pour enficher l'extrémité inférieure **(54)** de la tige de déclenchement **(5)** est prévu sur le corps de base **(60).**

5. Support de hauteur variable selon la revendication 4, **caractérisé en ce que** le logement d'enfichage **(66)** reçoit par encliquetage élastique l'extrémité inférieure **(54)** de la tige de déclenchement **(5).**

6. Support de hauteur variable selon la revendication 4 ou 5,
**caractérisé en ce que**
a) le logement d'enfichage **(66)** se compose en haut d'un serrage périphérique **(67)** ouvert vers l'avant, pouvant être écarté élastiquement, et en bas d'une douille **(69)** dans laquelle repose l'extrémité inférieure **(54)** de la tige de déclenchement **(5);**
b) en dessous du serrage périphérique **(67)** est prévue une contre-dépouille **(68)** qui est saisie par le dessous par des éléments de retenue **(56)** prévus sur l'extrémité inférieure **(54)** de la tige de déclenchement **(5);** et
c) lors du montage, l'extrémité inférieure **(54)** de la tige de déclenchement **(5)** peut d'abord être insérée obliquement dans la douille **(69)** puis la tige de déclenchement **(5)** peut être amenée ensuite dans une orientation verticale.

7. Support de hauteur variable selon la revendication 6, **caractérisé en ce que**
a) les éléments de retenue **(56)** à l'extrémité inférieure **(54)** de la tige de déclenchement **(5)** sont des parties moulées par paires, en forme d'oreilles;
b) dans la douille **(69),** un support en forme de creux **(690)** forme le siège d'enfichage pour l'extrémité inférieure **(54)** de la tige de déclenchement **(5);** et
c) à l'intérieur de la douille **(69)** est prévu un espace libre **(691)** qui fournit l'espace lors de l'insertion initiale oblique de la tige de déclenchement **(5).**

8. Support de hauteur variable selon l'une quelconque des revendications 1 à 7, **caractérisé en ce que** la pièce de verrouillage **(6)** constituée du logement d'enfichage **(66)** et du corps de base **(60)** présente:
a) sur le corps de base **(60),** une patte verticale **(61)** servant de support arrière du serrage périphérique **(67),** une patte d'assise **(62)** servant de base pour la douille **(69)** du logement d'enfichage **(66),** une portion **(63)** orientée vers le bas, qui se prolonge par la patte transversale **(64),** et un élément de réglage **(650)** s'étendant vers l'avant; et
b) l'effet de ressort de la pièce de verrouillage **(6)** est produit essentiellement par la portion **(63)** et sa transition à la patte d'assise **(62);** et
c) une aile **(65)** s'étendant vers l'arrière pouvant éventuellement être prévue sous la patte transversale **(64),** laquelle se dresse sous forme de butée contre la paroi intérieure du tube intérieur **(3)** dans la position libérée de la pièce de verrouillage **(6).**

9. Support de hauteur variable selon l'une quelconque des revendications 1 à 8, **caractérisé en ce que**
a) la pièce de verrouillage **(6)** est une pièce moulée d'une seule pièce par injection de plastique; et
b) l'élément de réglage **(650)** possède de préférence un insert métallique **(651),** qui vient s'appliquer dans la position bloquée de la pièce de verrouillage **(6)** dans le trou sélectionné **(22)** dans le tube extérieur.

10. Support de hauteur variable selon l'une quelconque des revendications 1 à 9, **caractérisé en ce que** le tube intérieur **(3)** et le tube extérieur **(2)**
a) présentent une section transversale rectangulaire, de préférence carrée; ou
b) ont une section transversale ronde, de préférence ronde circulaire; et
c) à l'extrémité inférieure **(24)** du tube extérieur **(2)** est prévue une butée **(29)** pour limiter la profondeur d'enfoncement maximale du tube intérieur **(3),** la butée **(29)** étant formée par exemple par une goupille transversale ou par des impressions orientées vers l'intérieur.

11. Support de hauteur variable selon l'une quelconque des revendications 1 à 10, **caractérisé en ce que** dans le cas d'une section transversale ronde du tube intérieur **(3)** et du tube extérieur **(2),**
a) une portion conique **(26)** se rétrécissant vers le bas peut être rapportée à l'extrémité inférieure **(24)** du tube extérieur **(2),** laquelle est prévue pour être enfoncée dans un logement complémentaire d'une structure portante, par exemple une plaque de socle;
b) la portion conique **(26)** peut présenter des contours de fixation en rotation **(27),** par exemple sous forme de trous oblongs ouverts vers le bas; et
c) dans la position bloquée de la pièce de verrouillage **(6),** la partie frontale de la patte transversale **(64)** vient s'appliquer dans l'évidement **(36)** du tube intérieur **(3)** et est en l'occurrence reçue entre des arêtes de paroi latérales **(361).**

12. Support de hauteur variable selon l'une quelconque des revendications 1 à 11, **caractérisé en ce que**
a) entre le tube extérieur **(2)** et le tube intérieur **(3),** à savoir entre les surfaces de paroi avec la matrice **(21)** ou l'évidement **(36),** une fente **(S)** est prévue, laquelle s'étend en forme de U vers l'arrière;
b) la patte transversale **(64)** du corps de base **(60)** de la pièce de verrouillage **(6)** s'étend en montant obliquement depuis la surface de paroi avec l'évidement **(36)** en direction de la surface de paroi avec le perçage **(37);** et
c) dans le cas d'une sollicitation ascendante axiale du tube intérieur **(3),** un pressage croissant du tube intérieur **(3)** avec sa surface de paroi qui présente le perçage **(37),** est exercé contre la surface de paroi en appui du tube extérieur **(2),** de sorte que le frottement d'adhésion augmente.
